(19) **Europäisches Patentamt**
**European Patent Office**
**Office européen des brevets**

(11) **EP 2 728 790 B1**

(12) **EUROPEAN PATENT SPECIFICATION**

(45) Date of publication and mention
of the grant of the patent:
**30.06.2021 Bulletin 2021/26**

(51) Int Cl.:
*H04L 9/08* (2006.01)  *H04L 9/00* (2006.01)
*H04L 9/06* (2006.01)

(21) Application number: **13190422.9**

(22) Date of filing: **28.10.2013**

(54) **Secure distribution of watermarked content**

Sichere Verteilung von Inhalten mit Wasserzeichen

Distribution sécurisée de contenu de filigrane

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.10.2012 EP 12190643**

(43) Date of publication of application:
**07.05.2014 Bulletin 2014/19**

(73) Proprietors:
• **Koninklijke KPN N.V.
3072 AP Rotterdam (NL)**
• **Nederlandse Organisatie voor toegepast-
natuurwetenschappelijk onderzoek TNO
2595 DA 's-Gravenhage (NL)**

(72) Inventors:
• **van Deventer, Mattijs Oskar
2264 DL Leidschendam (NL)**

• **Veugen, Peter
2272 WN Voorburg (NL)**

(74) Representative: **Wuyts, Koenraad Maria
Koninklijke KPN N.V.
Intellectual Property Group
P.O. Box 25110
3001 HC Rotterdam (NL)**

(56) References cited:
**EP-A2- 0 898 396        WO-A1-2006/129293
US-A1- 2011 055 585    US-A1- 2011 129 116
US-A1- 2012 163 654**

• **PARVIAINEN R ET AL: "LARGE SCALE
DISTRIBUTED WATERMARKING OF MULTICAST
MEDIA THROUGH ENCRYPTION", INTERNET
CITATION, 2001, XP002239136, Retrieved from
the Internet:
URL:http://citeseer.nj.nec.com7447585.html
[retrieved on 2001-01-01]**

EP 2 728 790 B1

## Description

Field of the invention

The invention relates to secure distribution of a watermarked content item and, in particular, though not exclusively, to methods and systems enabling secure delivery and watermarking of a content item, a watermark embedding module for use in such systems and a computer program product using such methods.

Background of the invention

Content providers generate and offer content (e.g. content items in the form of video and/or music titles) to consumers, but rarely deliver it directly to consumers. Instead, the delivery of the content to a consumer is outsourced to an intermediate party, a content distributor, which may comprise one or more content delivery networks (CDNs) for delivering content to customers. Currently CDNs are developed that allow cheap, efficient and high quality content delivery to a large number of consumers. When a CDN receives content items from a content source, the items are replicated and distributed over one or multiple delivery nodes of the CDN. Upon a request from a consumer, a content item is delivered from the nearest (or otherwise most suited) delivery node in the CDN.

Delivering content via a third party on the basis of a CDN or a network of CDNs, comprising multiple copies of content items, may substantially increase the risk of unauthorized access to content (signal theft) and unauthorized (re)distribution of content (content theft). For example, a content item may be illegally copied, by using e.g. a high-definition camcorder or by decrypting illegally intercepted encrypted content. For that reason content protection systems like Digital Rights Management (DRM) and Conditional Access (CA) systems are used to reduce the risk of signal or content theft, and to allow only authorized consumers and systems accessing it.

Typically, a content protection system may use a combination of encryption and watermarking techniques. Encryption may be regarded as a measure against signal theft. By using encryption, the signal (containing the content) can only be read by consumers that have the key to decipher the content. Hence, even if the signal is illegally intercepted, the content is only accessible if it is decrypted.

Watermarking may be regarded as a measure against content theft. Invisible to the consumer, there can be one or multiple watermarks in the content item identifying for example: the content item itself, the content source, the content distributor, the buying consumer and/or a transaction. A watermark may generally relate to hidden information, usually digital information, in the one or more data units of a content item, typically a content file or stream. When rendered for display, the watermark is not perceptible or only perceptible under certain conditions. This way, a watermark can be used to test the authenticity (origin) of the content item and to trace unauthorized distribution of the content item. Usually the watermark may have the form of a sequence of bits, which may form a unique value for identification of a transaction.

Watermarks may be designed so that they survive different signal processing and filtering techniques and so that it remains possible to trace an illegal copy of the content item back to its last authorized user, e.g. the consumer who bought the content, using a forensic tracing technique. Combining encryption and watermarking in a CDN environment poses considerable technological challenges, as it requires a CDN to securely watermark content, which typically is already encrypted by the content source. Hence, a CDN should be able to watermark content without decrypting it as the presence of a decryption and re-encryption process in the CDN would introduce an undesirable loophole in the security scheme.

An example of a content distribution system, which combines encryption and watermarking is described in an article by Verimatrix "Integrated Watermarking Creates More Profitable Pay-TV Businesses, Layered Security Enables Protection Beyond Networks and Devices", 2011. This article describes a server-side watermark embedding system, wherein a compressed video file is watermarked on the basis of basis of "replacement data" by a server in the network. Replacement data is generated during pre-processing of the video file and comprises information allowing the server to replace video information in the video file with alternative information in order to form a watermark, which is traceable by forensic techniques. According to the article, the proposed watermarking technique can also be used for watermarking encrypted video files, however no further explanation is provided how watermarking in the encrypted domain is actually achieved.

EP 0 898 396 A2 represents further prior art.

US2011/0129116 describes techniques wherein an embedding device in a server or a client is configured for replacing parts of the original video by watermarked parts so that when an illegally redistributed content item is discovered, the watermark can be extracted using forensic tracing technologies and linked to e.g. the last authorized user. In the document reference is made to the use of techniques to watermark content in the encrypted domain however very little detail is provided how an encryption scheme can be combined with the watermarking technique.

If a content distributor would generate differently watermarked versions of one content item, which is encrypted on the basis of a single encryption key, all differently watermarked versions can be decrypted with the same decryption key. Such situation would pose a serious security threat as a rogue consumer could perform signal theft of a watermarked version of the content item associated with a different consumer and decrypt it with his own decryption key in order to obtain a decrypted watermarked version of the content item that bears the watermark of a different consumer. Such decrypted watermarked content item could then be illegally redistributed without the risk of being traced back to the rogue consumer.

On the other hand, generating a differently encrypted watermarked version for every customer would require the content source to continuously generate differently encrypted versions and the content distributor to continuously ingest these differently encrypted versions of the same content item. Such scheme could increase the content processing at the content source to an unacceptable level. Moreover, it would undermine proper functioning of the outsourcing model wherein the content delivery is outsourced to a specialized content distributor, only requiring one-time ingestion of the content item by a content distributor which thereafter takes care of efficient watermarking and secure delivery of the content item to each requesting CCU. Instead such method would cause that for every content request, the requested content would have to be delivered all the way from the content source, through the network (CDN) of the content distributor, to the consumer (end-user). One of the main benefits of a CDN, which is efficient content distribution through the storage of (multiple copies) of content at network nodes close to the consumer, would thus no longer be realized.

Hence, there is a need in the art for improved methods and systems for enabling efficient watermarking and secure delivery of a content item to a CCU.

## Summary of the invention

The invention is defined by the independent claims.

It is an object of the invention to reduce or eliminate at least one of the drawbacks known in the prior art and to provide in a first aspect of the invention a method for enabling secure delivery and watermarking of at least part of a content item X using a split-key cryptosystem. Said split-key cryptosystem comprises encryption and decryption algorithms E and D, a key generating algorithm, also referred to as a key-generation algorithm, associated with E and D for generating encryption and decryption keys e,d. Said split-key cryptosystem further comprises a split-key algorithm for splitting e into i different split-encryption keys $e_1,e_2,...,e_i$ and/or for splitting d into k different split-decryption keys $d_1,d_2,...,d_k$ respectively, wherein $i,k\geq1$ and $i+k>2$. The split-key cryptosystem is further defined in that when executing i consecutive encryption operations and k consecutive decryption operations on content item X using said split-encryption and split-decryption keys respectively, a fully decrypted content item X ($D_{dk}(D_{dk-1}(...(D_{d2}(D_{d1}(E_{ei}(E_{ei-1}(...(E_{e2}(E_{e1}(X))...))=X$) may be generated. The method may comprise the step of forming a watermark in a first content part of said content item in the encrypted domain on the basis of said split-key cryptosystem and one or more perturbations.

Here the term "fully decrypted" may refer to the result of the execution of i consecutive encryption operations and k consecutive decryption operations on content item X (as input) on the basis of i split-encryption keys and k split-decryption keys respectively, so that a fully decrypted content item $D_{dk}(D_{dk-1}(...(D_{d2}(D_{d1}(E_{ei}(E_{ei-1}(...(E_{e2}(E_{e1}(X))...))=X$ is generated. A fully encrypted content item is identical to the content item which is used as input. Hence, a fully decrypted content item may be clear text if a clear text content item X is used as input to the encryption and decryption operations; or it may be an encrypted content item if an encrypted content item X is used as input to the encryption and decryption operations.

The split-key encryption system allows the generation of many sets of different split-decryption keys $d_1,d_2,...,d_k$ on the basis of a decryption key d and/or many sets of different split-encryption keys $e_1,e_2,...,e_i$ on the basis of an encryption key e. Each Content Consumption Unit (CCU) may be associated with a different (personalized) set of keys for fully decrypting an encrypted (and watermarked) content item. Hence, each content item delivered to a CCU may be differently (uniquely) encrypted and differently (uniquely) watermarked. It allows (partial) encryption of a content item in a single (partial) encryption step so that it can be securely sent from a first content processing entity, e.g. a content source, to a second content processing entity, e.g. a content distributor. Depending on the implementation, decryption of the (partially) encrypted content item may take place in a sequence of partial encryption and/or decryption steps wherein these steps may be performed by different content processing entities (in the network or in a CCU). This makes the method according to an aspect of the invention particularly suitable for situations wherein the delivery to the CCU and watermarking of the content is outsourced to one or more third parties (such as one or more content distributors, e.g. one or more CDN's). The watermarking scheme may be used by a content distributor (e.g. a CDN) to watermark the encrypted content item and to further (partially) decrypt it so that a personalized encrypted watermarked version is delivered.

In one embodiment, forming said watermark may comprise: partially encrypting one or more perturbations using said encryption algorithm E and a split-encryption key $e_1,e_2,...,e_i$ in order to form one or more partially encrypted perturbations; a first encryption module associated with a content source partially encrypting said at least first content part using said encryption algorithm E and said split-encryption key $e_1,e_2,...,e_i$ in order to form a partially encrypted first content part; a watermark embedding module associated with a content distributor embedding said one or more partially encrypted perturbations in said partially encrypted first content part in order to form a partially encrypted watermarked first content part; and, a second encryption module associated with said content distributor further partially encrypting said partially encrypted watermarked first content part in order to form a further partially encrypted watermarked first content part using said encryption algorithm E and a further split-encryption key $e_1,e_2,..,e_i$. Here, partially encrypting said one or more perturbations may be executed by said first encryption module associated with said content source or by a second encryption module associated with said content distributor.

In another embodiment, forming said watermark may comprise: encrypting one or more perturbations using said encryption algorithm E and said encryption key e in order to form one or more encrypted perturbations; a first encryption module associated with a content source encrypting said at least first content part using said encryption algorithm E and said encryption key e; a watermark embedding module associated with a content distributor embedding said one or more encrypted perturbations in said encrypted first content part in order to form an encrypted watermarked first content part; and, a decryption module associated with said content distributor partially decrypting said encrypted watermarked first content part using said decryption algorithm D and at least one of said split-decryption keys $d_1,d_2,...,d_k$ in order to form a partially decrypted watermarked first content part. Here, encrypting said one or more perturbations may be executed by said first encryption module associated with said content source or by a second encryption module associated with said content distributor.

In yet another embodiment, forming of said watermark may comprise: encrypting one or more perturbations using said encryption algorithm E and said encryption key e in order to form one or more encrypted perturbations; a first encryption module associated with a content source encrypting said at least first content part using said encryption algorithm E and said encryption key e in order to form a first encrypted content part; a decryption module associated with a content distributor partially decrypting said first encrypted content part using said decryption algorithm D and one or more of said split-decryption keys $d_1,d_2,...,d_k$, and partially decrypting said one or more encrypted perturbations using said decryption algorithm D and using said one or more of said split-decryption keys $d_1,d_2,...,d_k$ in order to form a partially decrypted first content part and one or more partially decrypted perturbations; and, a watermark embedding module associated with said content distributor embedding said one or more partially decrypted perturbations in said partially decrypted first content part in order to form a partially decrypted watermarked first content part. Here, encrypting said one or more perturbations may be executed by said first encryption module associated with said content source or by a second encryption module associated with said content distributor.

In contrast with the known methods for delivering encrypted and watermarked content items, encrypting and watermarking encrypted content on the basis of a split-key cryptosystem allows secure watermarking of encrypted content in the encrypted domain. The whole sequence of decryption steps need to be executed before the fully decrypted content item X is generated so that during delivery the content item is always in the form of a cipher text. The sequence of decryption steps may be executed by different elements in the delivery chain such that the last decryption step delivers the fully decrypted content item X.

Hence, a content source (such as a content provider) has to (partially) encrypt a content item and in some cases (partially) encrypt the one or more perturbations only once using the encryption algorithm E and a (split-)encryption key before it is sent to the content distributor, which will store the (partially) encrypted content item and one or more perturbations for future use. Thereafter, during subsequent distribution of content items by the content distributor to requesting CCUs, the watermarking process and further crypto operations associated with these segment requests are executed by the content distributor. This way, secure outsourcing of watermarking to a content distributor (an intermediate party) and the provisioning of differently (uniquely) encrypted and differently (uniquely) watermarked content items to a different CCUs may be achieved. The outsourcing of the watermarking process to the content distributor allows substantial reduction of processing load of the content source and substantial reduction of data traffic between the content source and the content distributor.

In an embodiment said method may further comprise providing position information associated with the position of one or more encrypted, partially encrypted or partially decrypted perturbable data units in said encrypted, partially encrypted or partially decrypted first content item respectively, a perturbable data unit comprising a payload which is designated for embedding at least one of said one or more perturbations.

In this embodiment, position information may be used to identify specific data units in a content item that are designated, e.g. suitable, for embedding a perturbation. The position information may be generated by a first content processing entity, e.g. a content provider, when pre-processing the content item and may be - for example - used in situations wherein the payload in the data units is encoded using entropy encoding which is very sensitive to small alterations in the information so that the addition of a small perturbation to an encoded payload may have - in some cases - a large impact on how the content associated with the payload is eventually displayed. Therefore, during pre-processing only certain predetermined data units (referred to as perturbable data units), which have a payload that allows (e.g. without being perceivable by a user upon consuming the content) insertion of a perturbation, are selected for the embedding process. On the basis of the position information, another second content processing entity, e.g. a content distributor, which is responsible for watermarking a content item, is able to localize particular data units that are suitable for embedding perturbations.

In an embodiment, said encryption and decryption algorithms are homomorphic algorithms, thus resulting in a homomorphic split-key cryptosystem. In another embodiment, said encryption and decryption algorithms are additive and/or multiplicative homomorphic algorithms. In yet another embodiment, said embedding may comprise: combining at least one of said encrypted, partially encrypted or partially decrypted first perturbations with at least one of said encrypted, partially encrypted or partially decrypted perturbable data units in the encrypted domain respectively using at least one homomorphic algebraic operation. The homomorphic properties of a homomorphic split-key cryptosystem may be used to efficiently generate an encrypted watermarked content item in the encrypted domain. A watermark w may be embedded in the content on basis of a set of encrypted perturbations using a simple algebraic process (e.g. multiplication between an encrypted perturbation and an encrypted data unit).

In an embodiment said split-key cryptosystem may be based on the (additive) homomorphic Damgard-Jurik (DJ) encryption and decryption algorithms. In an embodiment said DJ split-key cryptosystem may comprise a split-key algorithm comprising: determining an integer $d_2$ to be a random number $d_2 \in \{0,...,n-1\}$ wherein n is the modulus of the DJ system; determining $d_1$ by calculating $(d - d_2) \bmod n$.

In an embodiment said split-key cryptosystem may be based on the (multiplicative) homomorphic RSA encryption and decryption algorithms. In an embodiment said RSA split-key cryptosystem may comprise a split-key algorithm comprising: determining an integer $d_1$ to be a random number $1 < d_1 < \varphi(n)$, wherein $d_1$ and $\varphi(n)$ are coprime, n is the modulus of the RSJ system, and $\varphi(n)$ is Euler's totient function; determining $d_2 = d_1^{-1} * d \pmod{\varphi(n)}$.

In an embodiment said split-key cryptosystem may be based on the (multiplicative) homomorphic ElGamal encryption and decryption algorithms. In an embodiment said ElGamal split-key cryptosystem may comprise a split-key algorithm comprising: determining integer $d_1$ to be a random number $d_1 \in \{1,...,p-2\}$; determining $d_2 = (d-d_1) \bmod p$. The above-mentioned homomorphic encryption/decryption schemes allow a split-key algorithm to split a decryption key d into multiple split-decryption keys such that a homomorphic split-key cryptosystem is formed wherein an encrypted content item is decrypted by applying a sequence of decryption steps on the basis of the split-decryption keys.

The properties of a homomorphic split-key cryptosystem allows the outsourcing of the generation of encrypted perturbations which are used in the watermark embedding process to a third party, e.g. the content distributor, as even with the public encryption key e a content distributor cannot decrypt the (non-watermarked) encrypted content item. This way, encrypted perturbations and an identifier, e.g. a content identifier, may be generated by the third party and used by that third party to insert a watermark into an encrypted content item upon request of that content item by a consumer. Such implementation reduces processing time at the side of the content source and it reduces the traffic between the content source and the content distributor as encrypted perturbations typically comprise more bits than the identifier itself.

In an embodiment said one or more encrypted perturbable data units may comprise display distortion information; and, wherein said one or more encrypted perturbable perturbations are configured to compensate said display distortion information when said one or more data units are combined with said encrypted perturbations. Hence, this embodiment provides the advantage that it is not possible for a rogue employee of a content distributor to manipulate watermarks. For example, it is not possible add "zero" watermarks w=0 (i.e. performing an embedding operation without actually inserting perturbations in a content item) to the content in the encrypted domain as the combination of $E_e(0)$ and $E_e(X+y)$ results in $E_e(X+y)$ which - once decrypted - results in a distorted content item X+y which is not suitable for content consumption. This way a content distributor is stimulated to watermark the content in accordance with the specifications as provided with the content source (content provider).

In an embodiment said method may further comprise:
encrypting a second content part of said content item on the basis of a further cryptosystem associated with a second encryption and decryption algorithm and a second key generating algorithm. Thus, in this embodiment, the a content item may be split in at least a first and second part, wherein only the first part of the content item comprises perturbable data units that are encrypted in accordance with an homomorphic split-key cryptosystem. The data units of the second part of the content item may be encrypted using another, fast encryption scheme, e.g. AES or a symmetric (split-key) stream cipher. As the second part of the content item typically represents a substantial part of the total content item, processing time and traffic between the entities in the content delivery system can be substantially reduced.

In an embodiment, said embedding (of said encrypted, partially encrypted or partially decrypted perturbation) may comprise: on the basis of said position information, replacing one or more of said encrypted, partially encrypted or partially decrypted perturbable data units with one or more partially encrypted or partially decrypted perturbed data units respectively, a perturbed data unit comprising at least one perturbation. In this particular embodiment, perturbable data units may be replaced with associated perturbed data units, i.e. a data unit comprising (substantially) the same payload as the perturbable data unit that it is substituted for, and at least one perturbation. Depending on the implementation either (partially) encrypted or decrypted perturbed data units may be used during the replacement process. The (partially) encrypted or decrypted perturbed data units may be generated by pre-processing the content before it is sent to a content distributor.

Embedding by replacing encrypted data units, i.e. encrypted perturbable data units, at predetermined locations in the encrypted content item with encrypted data units comprising one or more perturbations, i.e. encrypted perturbed data units, provides a simple and processing-efficient mechanism for introducing a watermark into a content item in the encrypted domain. Furthermore, replacement by watermarking allows the use of a non-homomorphic split-key cryptosystem (non-homomorphic encryption/decryption algorithms). In particular, it allows the use of symmetric split-key cryptosystems such as the one time path split key cryptosystem or a split-key cryptosystem on the basis of a linear stream cipher (which may use one or more multiple linear feedback shift registers). These symmetric split-key cryptosystems are very fast and efficient algorithms and are particular important in video streaming applications wherein fast watermarking and fast encryption/decryption of large amounts of data is required.

In an embodiment, said method may comprise: decrypting said partially encrypted or partially decrypted watermarked first content part into a fully decrypted first content part on the basis of said first decryption algorithm D and a split-decryption key respectively. In another embodiment, a decryption unit in a content consumption unit or a second content delivery network may perform said decrypting.

In an embodiment, watermarking said encrypted first content may be performed by a first content delivery network, preferably said first content delivery network comprising a watermark embedding function and a decryption unit. As already discussed above, the invention is especially suited for use in situations wherein the delivery of content is outsourced to one or more content distributor, e.g. a CND or a network of CDNs.

In an embodiment, said delivery of said content item comprises the delivery of at least part of said first content item from a first (upstream) content distribution network (CDN1) to at a second (downstream) content distribution network (CDN2), wherein said first and second content distribution networks comprise at least an encryption unit or a decryption unit. In another embodiment, said first and/or second content delivery network may comprise a watermark embedding unit for embedding perturbations in said content item in the encrypted domain.

In an embodiment, said method may further comprise:
said first content delivery network transmitting at least part of said encrypted, partially encrypted or partially decrypted first content part and at least part of said one or more encrypted, partially encrypted or partially decrypted perturbations to said second content distribution network respectively; said second content distribution network using said at least part of said one or more encrypted, partially encrypted or partially decrypted perturbations for embedding a watermark associated with said second content distribution network in said encrypted, partially encrypted or partially decrypted first content part.

Hence, in these CDN-based embodiments, the content item and the perturbations may be sent in encrypted form to a first CDN1, processed and subsequently forwarded to a second CDN2, which may use these perturbations to watermark a content item in the encrypted domain. A CDN may be configured to send perturbations to another CDN in advance over an inter-CDN interface. This interface may also be used by CDNs to exchange information on the watermarking and/or the split-key cryptosystem, including the type of encryption algorithm and a seed for generating (split) encryption keys

In an embodiment said one or more perturbations may be embedded in the payload of one or more (partially) encrypted or (partially) decrypted perturbable data units. In a further embodiment said payload may comprise encoded data. In yet further embodiment said payload may comprise MPEG or H.264-encoded data. In another embodiment said one or more perturbations may be embedded in one or more DCT coefficients. In yet another embodiment, said one or more perturbations may be embedded in one or more low frequency DCT coefficients associated an MPEG-encoded payload. In this embodiment, perturbations may be embedded in encoded data units by combining (adding, subtracting and/or multiplying) a perturbation with one or more low frequency DCT coefficients. Typically, the low frequency DCT coefficient values are sufficiently high so that a slight modification (e.g. adding a perturbation) will not be noticed when the perturbed data units are displayed.

In an embodiment, said method may further comprise:
generating an identifier associated with the delivery of at least part of a content item; embedding said one or more perturbations in said first encrypted, partially encrypted or partially decrypted content part on the basis of said identifier.

In a further aspect, the invention may relate to a system for enabling secure delivery and watermarking of a content item X comprising: a key generator associated wherein said key generator may comprise a key generating algorithm for generating an encryption key e for said encryption unit and a decryption key d and a split-key algorithm for splitting e into i different split-encryption keys $e_1, e_2, ..., e_i$ and/or for splitting d into k different split-decryption keys $d_1, d_2, ..., d_k$ respectively wherein $i, k \geq 1$ and $i+k>2$; wherein executing i consecutive encryption operations and k consecutive decryption operations on content item X using said split-encryption and split-decryption keys respectively, generates content item X $(D_{dk}(D_{dk-1}(...(Dd_2(Dd_1(Ee_i(Ee_{i-1}(...(E_{e2}(E_{e1}(X))...))=X)$; one or more encryption units for (partially) encrypting at least a first content part of said content item using a first encryption algorithm E; and, using said encryption key e or at least one of said split-encryption keys; one or more decryption units comprising a decryption algorithm D and being configured for decrypting an encrypted or partially encrypted first content part on the basis of said first decryption algorithm D; and on the basis of at least one of said split-decryption keys; at least one watermark embedding module configured for embedding one or more encrypted, partially encrypted or partially decrypted perturbations in an encrypted, partially encrypted or partially decrypted first content part respectively, a perturbation representing at least part of a watermark.

In a further aspect, the invention may relate to content delivery network for enabling secure delivery and watermarking of at least part of a content item X to a content consumption unit using a split-key cryptosystem wherein said split-key cryptosystem may comprise encryption and decryption algorithms E and D, a key generating algorithm for generating encryption and decryption keys e,d, a split-key algorithm for splitting e into i different split-encryption keys $e_1,e_2,...,e_i$ and/or for splitting d into k different split-decryption keys $d_1,d_2,...,d_k$ respectively wherein $i,k \geq 1$ and $i+k>2$; wherein executing i consecutive encryption operations and k consecutive decryption operations on content item X using said split-encryption and split-decryption keys respectively, generates a fully decrypted content item X $(D_{dk}(D_{dk-1}(...(D_{d2}(D_{d1}(E_{ei}(E_{ei-1}(...(E_{e2}(E_{e1}(X))...))=X).$

In an embodiment, said content delivery network may comprise: at least one encryption unit for encrypting or partially encrypting at least a first content part of said content item using a first encryption algorithm E; and, using said encryption key e or at least one of said split-encryption keys; and/or, at least one decryption unit comprising a decryption algorithm D and being configured for decrypting an encrypted or partially encrypted first content part on the basis of said first decryption algorithm D; and, on the basis of at least one of said split-decryption keys; and, a watermark embedding module configured for embedding one or more encrypted, partially encrypted or partially decrypted perturbations in an encrypted, partially encrypted or partially decrypted first content part, a perturbation representing at least part of a watermark; and, at least one content delivery node configured for storing one or more encrypted content items and for delivering a partially decrypted watermarked content item to said content consumption unit.

In an embodiment, said content delivery network may further comprise: an interface for transmitting at least part of said encrypted, partially encrypted or partially decrypted perturbations to a further content delivery network; or, for receiving encrypted, partially encrypted or partially decrypted perturbations from a further content delivery network.

In a further aspect, the invention may relate to a watermark embedding module for use with a, preferably homomorphic, split-key cryptosystem, wherein said, preferably homomorphic, split-key cryptosystem may comprise, preferably homomorphic, encryption and decryption algorithms E and D, a key generating algorithm for generating encryption and decryption keys e,d, a split-key algorithm for splitting e into i different split-encryption keys $e_1,e_2,...,e_i$ and/or for splitting d into k different split-decryption keys $d_1,d_2,...,d_k$ respectively wherein $i,k \geq 1$ and $i+k>2$; wherein when executing i consecutive encryption operations and k consecutive decryption operations on content item X using said split-encryption and split-decryption keys respectively, generates a fully decrypted content item X $(D_{dk}(D_{dk-1}(...(D_{d2}(D_{d1}(E_{ei}(E_{ei-1}(...(E_{e2}(E_{e1}(X))...))=X)$ and wherein said watermark embedding module may be configured for: receiving at least an encrypted, partially encrypted or partially decrypted first content part and one or more encrypted, partially encrypted or partially decrypted perturbations respectively, a perturbation representing at least part of a watermark, said perturbation optionally being received embedded in (comprised in/as part of) a perturbed data unit; said watermark embedding module further configured for: embedding said one or more encrypted, partially encrypted or partially decrypted perturbations in said at least one of an encrypted, partially encrypted or partially decrypted first content part respectively, a perturbation representing at least part of a watermark, preferably said embedding comprising at least one of

- combining in the encrypted domain said one or more encrypted, partially encrypted or partially decrypted perturbations with at least one encrypted, partially encrypted or partially decrypted perturbable data unit respectively, using at least one homomorphic algebraic operation, or
- said one or more encrypted, partially encrypted or partially decrypted perturbations being received embedded in encrypted, partially encrypted or partially decrypted perturbed data units respectively; and replacing said perturbable data units by respective ones of said perturbed data units.

The replacement (substitution) of the perturbable data units by their associated perturbed data units , is preferable performed on the basis of position information associated with (indicating) the position of the one or more encrypted, partially encrypted or partially decrypted perturbable data units in said encrypted, partially encrypted or partially decrypted first content item respectively (also referred to throughout this application as replacement information); which position information may be provided to the watermark embedding module. The alternative of combining the perturbations with the perturbable data units may be performed on the basis of the same or other position information. However said combining does not necessary require providing the position information to the watermark embedding module. For example by providing the perturbations at the correct positions (meaning the same positions as those of the associated perturbable data units in the first content part) in a data stream of equal length as the length of (the data stream comprising) the first content part, the watermark embedding module may combine the data stream comprising the perturbations with the first content part without needing the position information. The areas of the datastream outside the areas containing the perturbations may contain data that when combined with the data of the first content part at the same positions, have no effect on the resulting content (e.g. lead to zero perturbations in those areas of the first content part after the combining operation). For example in embodiments of the invention, when combining the datastreams in the encrypted domain, the data in the areas outside the perturbations may be all 'zero' bits (before encryption) and the two datastreams are encrypted, partially encrypted or decrypted on the basis of homomorphic encryption/decryption algorithms. A (homomorphic) algebraic addition operation performed on the two streams, will have the effect that outside the areas containing the perturbable data units, the (content) bitstream is not altered (because only zero bits are being added in these areas to the existing (content) bitstream). Likewise when a multiplication operation in the encrypted domain is foreseen, these bits (outside the areas containing the perturbations) could all have the value of 1 (prior to encryption).

Other (non-exhaustive) examples wherein no position information is required, are provided in the application.

The invention also relates to a computer program product comprising software code portions configured for, when run in the memory of computer executing at least one of the method steps as described above.

The invention will be further illustrated with reference to the attached drawings, which schematically will show embodiments according to the invention. It will be understood that the invention is not in any way restricted to these specific embodiments.

Brief description of the drawings

Fig. 1 depicts a known content delivery system for enabling the delivery of watermarked and encrypted content items via a content distributor to consumers.

Fig. 2 depicts a content delivery system for enabling the delivery of watermarked and encrypted content items via a content distributor to consumers according to one embodiment of the invention.

Fig. 3 (A) and (B) depict stream ciphers for use in a split-key cryptosystem according to various embodiments of the invention.

Fig. 4 depicts a schematic of a secret key generator according to one embodiment of the invention.

Fig. 5 depicts flow charts illustrating the generation of the encryption/decryption pair e,d and associated split-keys according to various embodiments of the invention.

Fig. 6 (A) and (B) depict schematic of a content delivery system comprising a split-key cryptosystem configured for watermarking encrypted content items according to various embodiments of the invention.

Fig. 7 depicts a content delivery system for enabling the delivery of watermarked and encrypted content items via a content distributor to consumers according to yet another embodiment of the invention.

Fig. 8 depicts a schematic of a content delivery system comprising a split-key cryptosystem configured for watermarking encrypted content items according to an embodiment of the invention.

Fig. 9 depicts matrix of DCT coefficients, which is suitable for embedding part of a watermark.

Fig. 10 depicts a schematic overview of a content delivery system according to an embodiment of the invention wherein the content item is split in a common part and a to-be-watermarked part.

Fig. 11 depicts a process flow associated with the process of delivering a compressed encrypted and watermarked content item according to an embodiment of the invention.

Detailed description

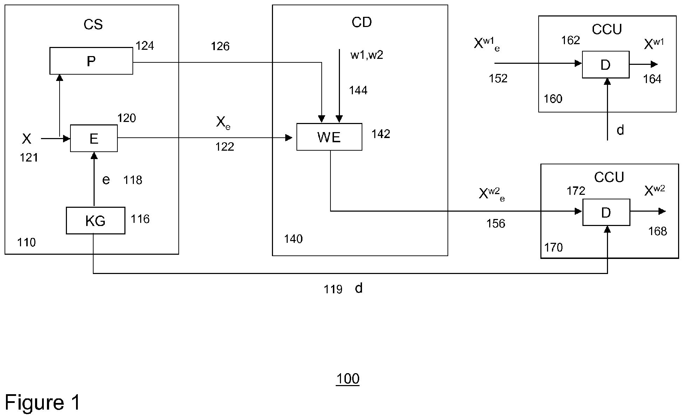

Fig. 1 depicts a schematic of a conventional content delivery system comprising a content protection system for watermarking encrypted content. The content delivery system may comprise a content source (CS), e.g. a content provider, 110, a media server 140 and one or more content consumption units (CCU) 160,170 wherein a CCU may be configured to contact the media server for delivery of a content item. Here, a content item may generally relate to (part of) a file or a stream comprising data units carrying a video, audio and/or text payload, wherein a data unit represents a logical data structure which may be determined by the one or more protocols which are used in delivering a content item to a CCU.

The content delivery system may comprise a content protection system (which may also be referred to as a DRM system) in order to protect the content items from content or signal theft. The content protection cryptosystem may comprise a cryptosystem and a watermarking system. The cryptosystem typically comprises an encryption unit associated with an encryption algorithm 120, which is configured to encrypt plaintext content items into encrypted content items using an encryption key e 118 and a decryption unit associated with an decryption algorithm D 162,172, which is implemented in the CCU 160,170 and configured to decrypt encrypted content items on the basis of a decryption key d 119. An encrypted content item may also be referred to as a DRM-protected content item. The generation and distribution of encryption and decryption keys e,d are managed by a secret key generator 116. The watermarking system typically comprises a watermarking embedding (WE) function 142 (in short an embedding function) for embedding watermarks 144 in the encrypted content items it delivers to CCUs.

The content source **110** may further comprise a content pre-processor **124** for pre-processing a content item X **121.** The pre-processor is configured to decode and analyze the payload of data units in the content item (e.g. a compressed video file), to select data units that are suitable for watermarking and to determine position information regarding the position of these selected data units in the (encrypted) content item. These data units are hereafter referred to as a perturbable data unit, i.e. a data unit comprising a payload to which a perturbation may be added. Embedding perturbations in the perturbable data units results in a watermarked content item. The perturbation (and perturbable data unit) is selected such that - when rendered (as part of the content rendering)- it is not visible or perceptible by an average viewer.

The pre-processor is further configured to generate perturbed data units, i.e. perturbable data units to which a perturbation is added, and to send replacement information **126,** i.e. the position information and encrypted perturbed data units, to the embedding function. After the pre-processing, content source may sent the content in encrypted form $E_e(X) = X_e$ **122** to the CD (where $X_e$ is a short notation of $E_e(X)$, i.e. the application of encryption algorithm E to content item X using encryption key e). Multiple copies of the encrypted content item may be stored at different delivery nodes within the CDN.

When a CCU requests a content item from the CDN, the CDN may generate a transaction identifier, e.g. a sequence of bits. Such identifier may be generated on the basis of the user's identity, the content distributor's identity, date and time of the transaction, etc., including combinations thereof.

The embedding function may use the transaction identifier and the replacement information to embed the transaction identifier as a watermark in the content. The transaction ID may uniquely identify the transaction between the first consumer and the CDN and/or content provider. The embedding of the watermark may be realized by selectively replacing encrypted perturbable data units with encrypted perturbed data units. For example, if the replacement information may identify the position of five data units 1001, 2004, 2248, 8888 and 9233 in the encrypted content item as perturbable data units, a transaction identifier 10001 may be embedded in the content item by replacing perturbable data units 1001 and 9233 with their associated perturbed data units Hence, in such scheme a replacement represents a "1" and no replacement represents a "0".

The replacement information allows the CDN to watermark an encrypted content item with a watermark w and sent the encrypted watermarked content item $E_e(X+w)$ **152** (hereafter in short $X^w_e$) to the requesting CCU **166,** comprising a first decryption unit **162** for decrypting the encrypted data into a first watermarked content item $X^w$ **164** using a decryption key d, which the consumer received from the content provider during the transaction.

In the system of **Fig. 1** requested content times are watermarked on the basis of a single encrypted content item. Differently watermarked versions of a content item are therefore encrypted with the same encryption key e and, hence, all watermarked versions can be decrypted using the same decryption key d. This scheme therefore comprises a potential security threat. If a rogue consumer manages to perform signal theft of a watermarked version of the content associated with a different consumer, then the rogue consumer would able to decrypt it with his own decryption key and obtain a decrypted watermarked version of the content that has the watermark for a different consumer. Therefore, the rogue consumer could illegally redistribute that version without the risk of being traced and making another consumer look suspect. Alternatively, a rogue consumer may claim being the victim of the above scenario and get away with illegally redistributing content that he purchased himself.

Generating a different encrypted version for each request of a CCU cannot solve the problem, as for each request a newly encrypted version of the content item should be ingested. Moreover, for each newly encrypted version replacement information should be provided to the CDN. Generating differently encrypted versions of a content item would therefore largely increase the processing at the content source side and undermine proper functioning of the outsourcing of the content delivery to a content distributor, i.e. one-time ingestion of the content item by a specialized CDN which takes care of efficient watermarking and secure delivery of the content item to each requesting CCU.

The pre-processing and encryption of a content item and the generation of the replacement information is a relatively expensive and time-consuming process, hence preferably, it is desired to pre-process a content item only once by the content source, e.g. upon ingestion of the encrypted content by the CDN. Thereafter, preferably all (or at least most of the) further content processing required for secure delivery to CCUs, e.g. watermarking, is outsourced to the CDN.

As will be shown hereunder in more detail, the above-described problem may be solved by the content protection system according to the present invention. This content protection system comprises a so-called split-key cryptosystem and a watermarking system, wherein the split-key cryptosystem allows a content source to deliver a single encrypted content version to a content distributor, e.g. a CDN, and allows the content distributor to generate for each requested content item a differently encrypted watermarked version without decryption of the encrypted content item. It allows a content source to control and monitor the delivery of encrypted watermarked content items to CCUs even though the actual delivery and watermarking of the content is outsourced to a content distributor. The details and advantages of the content protection system are described hereunder in more detail with reference to the appending figures.

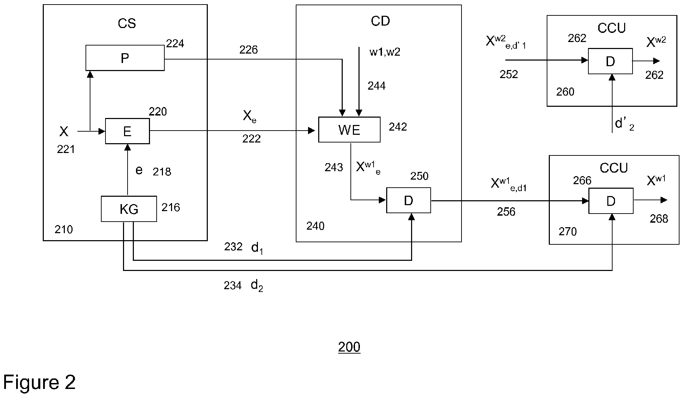

**Fig. 2** depicts a schematic of a content delivery system comprising a so-called split-key cryptosystem configured for watermarking encrypted content according to one embodiment of the invention. In particular, the content delivery system comprises a content source CS **210** configured to send an encrypted content item to at least one content distributor CD **240,** wherein the content distributor is configured for watermarking the encrypted content item and to partially decrypt the encrypted watermarked content item so that differently watermarked, differently encrypted versions of the content time are delivered to different content consumption units CCUs **260,270.**

A content distributor may relate to a content distribution platform or a chain of different content distribution platforms configured to distribute content from the content source to the content consumption units. A content distributor may use electronic means for delivering content e.g. one or more content delivery networks (CDNs). A CDN may comprise a number of delivery nodes for storing and delivering (part of) a content item to a CCU and a central CDN node for controlling ingestion of content items into the CDN from an external source and for managing the distribution of copies of a content item over one or more delivery nodes in the CDN.

CDNs are especially suited for delivery of so-called segmented or tiled content. For example, HTTP adaptive streaming (HAS), Scalable Video Coding (SVC) and spatially segmented video (e.g. tiled video) use segmentation on the basis of time, quality and space respectively. A so-called manifest file (also known as a Media Presentation Description or MPD for MPEG-DASH or M3U8 playlist for Apple HTTP Live Streaming) describes the relation between the different segment files and/or streams and the location where the segments may be retrieved. In order to enable a client to access stored content in a CDN, the client is provided with the manifest file so that it is able to retrieve the segments.

A segment file or segment stream (in a short a segment) identified in the manifest file may be retrieved by a file retrieval protocol, e.g. HTTP or FTP, or a streaming protocol, e.g. RTSP/RTP or HAS. Further, a video title, or more in general, a content item rendered by a segmentation scheme may be referred to as a segmented content item.

Alternatively and/or in addition a content distributor may use physical means for delivering content, e.g. a recording-medium such as a magnetic recording medium, an optical recoding medium using e.g. DVD and Blu-Ray technology or an opto-magnetic recording medium.

A content source, sometimes also referred to as the content originator, may relate to a content provider (CP), a content preparation system or another CDN. A content source may comprise one or more network nodes, e.g. one or more media servers, configured to offer and/or deliver content items, including but not limited to video, pictures, audio, software, data and/or text in the form of files and/or streams to consumers or another content distributor. A consumer may purchase and receive the content items using a content consumption unit (CCU), comprising a software client or a combined hardware/software client for interfacing with the CDN and the CP.

A CUU may generally relate to a device configured to process file-based and/or (live) streaming content items. Such devices may include a (mobile) content play-out device such as an electronic tablet, a smart-phone, a notebook, a media player, a player for play-out of a recording medium such as a DVD of a Blu-Ray player. In some embodiments, a CCU may be a set-top box or a content recording and storage device configured for processing and temporarily storing content items for future consumption by a further content consumption unit (e.g. a smart-phone or a media player connected to the set-top box or the content recording and storage device).

The content source may comprise (or be associated with) an encryption unit **220** comprising encryption algorithm E and secret key generator **216** comprising a key algorithm and a split-key algorithm for generating keys e,d and split-decryption keys $d_1,d_2$ respectively on the basis of secret information S. The content distributor and CCUs may comprise decryption units **262,266,250** associated with decryption algorithm D. Here, E,D, the key generating and the split-key algorithm belong to a predetermined split-key cryptosystem wherein applying the encrypted content item $E_e(X)$ to a sequence of decryption steps (in this case two decryption steps on the basis of split-decryption keys $d_1$ and $d_2$) results in a fully decrypted content item: $D_{d2}(D_{d1}(E_e(X)))=D_{d2}(D_{d1}(X_e))=X$. As will be explained hereunder in more detail, the split-decryption cryptosystem allows decryption of the content by the content source and decryption of the encrypted content via a sequence of two or more split-decryption steps, which are executed by one or more decryption units in the content distributor and a decryption unit in the CCU respectively. Detailed examples of spit-key cryptosystems are described hereunder in more detail.

The key generator **216** may generate at least one encryption key e **218** for encryption unit **220** in order to encrypt content item X **221** into encrypted content item $X_e$ **222**. The thus encrypted content item may be sent by the content source as an encrypted file or stream to the content distributor **240** for further processing and delivery.

The content item X may be pre-processed by pre-processing function **224** associated with the content source in order to generate replacement information **226** identifying perturbable data units, i.e. data units in encrypted content item $X_e$, which may be replaced with encrypted perturbed data units. The generated replacement information of encrypted content item $X_e$ may be sent to an embedding function WE **242** associated with the content distributor (the embedding function may be executed by a watermark embedding module comprising for example a microprocessor, memory for storing received data, and memory for loading computer program instructions executable by the microprocessor for performing parts of the method according to the invention).

The pre-processing function may be configured to decode and analyze a content item, e.g. a compressed video file or stream. In particular, the pre-processing function may generate position information associated with a predetermined number of perturbable data units $x_i$ i=1,...,N in a content file or stream. A perturbable data unit may refer to a logical data structure, carrying part of the content (payload) in a content file or stream (e.g. (part of) an (encoded) video frame, macro block, video slice or audio frame) that allows a perturbation $\delta$ (e.g. addition or subtraction). Such perturbation may be introduced into the payload using any type of content processing operation, e.g. binary addition or a binary XOR operation bits so that a predetermined bit or number of predetermined bits are changed from "0" to "1" or vice-versa. Such operation thus changes a perturbable data unit $x_i$ into a perturbed data unit $x_i+\delta$ (wherein the + symbol denotes any suitable operation for changing one or more bits in a perturbable data unit $x_i$).

Further, in some embodiments, the pre-processing function may generate one or more encrypted perturbed data unit $E_e(X_i+\delta)$ which are used to replace encrypted perturbable data unit $E_e(X_i)$ in the original encrypted content item $E_e(X)$ when a predetermined condition is met, e.g. when a predetermined bit in the identifier is "1".

The perturbable data units in the encrypted content item and the encrypted perturbed data units may be used to embed a watermark in a content item in the encrypted domain, wherein the watermark is detectable using forensic techniques and not visible when displayed. The position information associated with perturbable data units in the encrypted content item, and, in some embodiments, the generated (encrypted) perturbed data units may be organized and structured as replacement information **226** associated with a predetermined content item.

Then, upon a request of a first CCU, the content distributor may generate an identifier, e.g. a transaction identifier, comprising a sequence of bits of a predetermined length for identifying the transaction with the first consumer. The embedding function associated with the content distributor may execute a predetermined embedding process so that the identifier is embedded into the encrypted content $X_e$ **222** as watermark w1 **244,** thereby forming watermarked encrypted content $X^{w1}_e$ **243.**

The embedding function may use the replacement information associated with the encrypted content item and replace one or more encrypted, perturbable data units with encrypted perturbed data units such that a desired identifier is embedded as a watermark in the encrypted content. For example, the replacement information may identify the position of five data units 1001, 2004, 2248, 8888 and 9233 in the encrypted content item as (encrypted) perturbable data units $\{E_e(x_1), E_e(x_2), E_e(x_3), E_e(x_4), E_e(x_5)\}$. By replacing one or more of these perturbable data units with perturbed data units, a transaction identifier may be embedded as a watermark into the content item. For example, replacing encrypted perturbable data units 1001,2004 and 9233 with their associated encrypted perturbed data units $E_e(x_1+\delta), E_e(x_2+\delta), E_e(x_5+\delta)$, may result in a watermark corresponding to the binary code "11001".

The secret key generator in the content source may use encryption key e **218** and associated secret information S in order to generate an associated decryption key d. A split-key algorithm in the secret key generator may then use the decryption key d and the secret information S to determine split-decryption keys $d_1$ and $d_2$, which are required in order to fully decrypt the encrypted watermarked content item $X^{w1}_e$. To that end, the key generator may distribute the first split-decryption key $d_1$ **232** to the content distributor and the second split-decryption key $d_2$**234** to the CCU **270** of a first consumer. The decryption unit **250** of the content distributor may use the first decryption key $d_1$ **232** to partially decrypt encrypted watermarked content item $E_e(X+w1) = X^{w1}_e$ **243** in into a partially decrypted watermarked content item $D_{d1}(E_e(X+w1))= X^{w1}_{e,d1}$ **256.**

The thus "partially" decrypted and watermarked content item $X^{w1}_{e,d1}$ may be sent to the decryption unit **266** of the first CCU **270** which may fully decrypt the partially decrypted and watermarked content item $X^{w1}_{e,d1}$ on the basis of split-decryption key $d_2$ and decryption algorithm D:

$$D_{d2}(D_{d1}(E_e(X+w1))= D_{d2}(D_{d1}(X^{w1}_e))= D_{d2}(X^{w1}_{e,d1}) = X^{w1} \text{ } \mathbf{268}.$$

It is submitted that the wording "partially decrypted" in this document refers to the process of applying one or more decryption steps to an encrypted content item wherein the one or more decryption steps are part of a sequence of decryption steps which is needed to fully decrypt an encrypted content item content item. Unless expressly mentioned, "partially decrypted" does not mean that only part of the content is decrypted. Partially decrypted content $E_{e,d1}(X)=X_{e,d1}$ is cipher text and as such as secure to unauthorized access as fully encrypted content $X_e$.

Here "fully decrypted" may refer to the result of the execution of i consecutive encryption operations and k consecutive decryption operations on content item X (as input) on the basis of i split-encryption keys and k split-decryption keys respectively, so that a fully decrypted content item $D_{dk}(D_{dk-1}(...(D_{d2}(D_{d1}(E_{ei}(E_{ei-1}(...(E_{e2}(E_{e1}(X))...)=X$ is generated. A fully encrypted content item is identical to the content item which is used as input. Hence, a fully decrypted content item may be clear text if a clear text content item X is used as input to the encryption and decryption operations; or it may be an encrypted content item if an encrypted content item X is used as input to the encryption and decryption operations.

In the process described above, in on embodiment, the partially decrypted watermarked content item may be sent to the CCU using a suitable streaming protocol, e.g. an adaptive streaming, such as the HTTP adaptive streaming protocol (HAS). In another embodiment, the partially decrypted and watermarked content item may be recorded on a storage medium, e.g. an optical or magnetic storage medium, which may be delivered to the user of the CCU. In that case, the CCU may comprise a player for reading the content item from the storage medium.

The process above may be repeated for different CCUs, wherein, the embedding and split-decryption process as described above may repeated using a different watermark w2, a different first decryption key $d_1'$ and a different second decryption key $d_2'$.

Hence, from the above it follows that, in contrast with the known CDN-based content delivery systems for delivering encrypted and watermarked content items to a consumer, watermarking encrypted content using a split-decryption cryptosystem allows secure watermarking of encrypted content so that each content item delivered to a consumer is differently (uniquely) encrypted and differently (uniquely) watermarked.

The split-key cryptosystem according to the invention is configured such that the combined knowledge of $X_e$ or $X^{w1}_e$ and $d_1$ does not leak information how to obtain a clear version of the encrypted or partially encrypted content item. Similarly, the combined knowledge of $X_e$ or $X^{w1}_e$ and $d_2$ does also not leak information how to obtain a clear version of the encrypted or partially encrypted content item.

Moreover, the split-key cryptosystem allows the generation of many set of different split-decryption key $d_1, d_2, ...$ associated with one encryption key e so that each consumer may be associated with a different (personalized) set of keys for fully decrypting a set of encrypted (and watermarked) content items. The whole sequence of decryption steps need to be executed before a clear text is generated. Furthermore, the sequence of decryption steps may be executed by different elements in the delivery chain such that the last decryption step delivers the clear content item.

Further details and embodiments associated with split-key cryptosystems and content delivery systems comprising such split-key cryptosystems are described in related European patent application with application number 11182553.5 with title "Secure distribution of content", which is hereby incorporated by reference into this application. A number of embodiments of the split-key cryptosystems will be described hereunder in more detail.

In a first embodiment, a split-key cryptosystem may be based on the symmetrical encryption algorithm known as the "one-time pad". In this embodiment, an encryption key e may be generated in the form of a long random binary number generated using a random generator. Encryption algorithm E may be a binary function for encrypting content item X into an encrypted content item $X_e$ by applying an exclusive-or (XOR, $\oplus$) operation to X using e:

$$e = RAN\_1$$

$$X_e = E_{PT}(X) = X \oplus e$$

A first split-decryption key $d_1$ and second split-decryption key $d_2$ may be formed on the basis of e. For example, second split-decryption key $d_2$ may be a random binary number having the same length as e and first split-decryption key $d_1$ may be generated by executing a bitwise exclusive-or operation between $d_1$ and e:

$$d_2 = RAN\_2$$

$$d_1 = d_2 \oplus e$$

A first decryption operation may "partially" decrypt encrypted content item $X_e$ into $X_{e,d1}$ by executing a bitwise exclusive-or operation on $X_e$ and $d_1$. A second decryption operation may fully decrypt partially decrypted content item $X_e,d_1$ into content item X by executing an exclusive-or operation on the basis of $X_{e,d1}$ and $d_2$:

$$X_{e,d1} = D_{d1}(X_e) = E_e(X) \oplus d_1$$

$$X_{e,d1,d2} = D_{d2}(X_{e,d1}) = D_{d1}(X_e) \oplus d_2 = X$$

If the binary values e, $d_1$ and $d_2$ are shorter than content item X, each of them may be concatenated with itself several times, and then truncated to the length of content item X. However, such concatenation would reduce the security of the system.

The above described "one-time pad" cryptosystem with two split-decryption keys may be easily generalized to a split-key cryptosystem with k split-decryption keys and/or i split-encryption keys. For example, instead of choosing long binary streams $d_1$ and $d_2$ such that $d_1 \oplus d_2 = e$, k-1 random binary streams $d_1 ... d_{k-1}$ may be generated and the final random binary stream may be determined using $d_k = d_1 \oplus ... \oplus d_{k-1} \oplus e$.

In a similar way a split-key cryptosystem with i split-encryption keys and k split-decryption keys may be generated. In this embodiment encryption and decryption algorithms D,E are identical, i.e. both are performed as an exclusive-or operation. Further, the encryption and decryption algorithms are commutative, so the split-keys may be generated in any desired order and the encryption and decryption operations may be performed in any desired order.

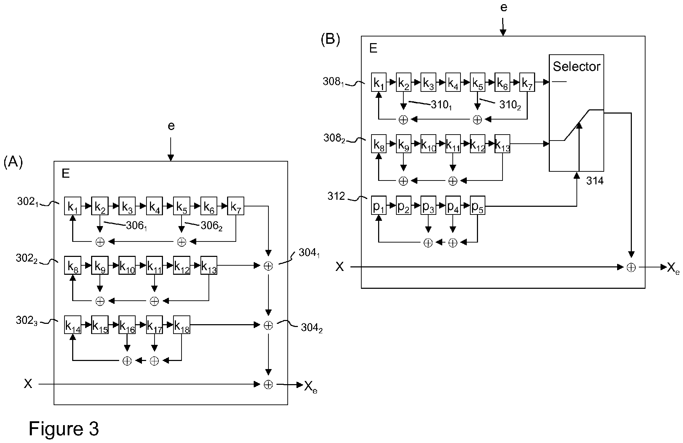

In second embodiment, a split-key cryptosystem may be based on a symmetric stream cipher. **Fig. 3 (A)** and **(B)** depict stream ciphers for use in a split-key cryptosystem according to various embodiments of the invention.

In particular, **Fig. 3(A)** depicts a linear stream cipher as an encryption algorithm E providing bitwise encryption of content item X into $X_e$ on the basis of encryption key e. The linear stream cipher may use one or more multiple linear feedback shift registers (LFSR) **302$_1$-302$_3$**, which may be combined by one or more XOR functions **304$_1$,304$_2$**. An LFSR may comprise one or more preconfigured taps **306$_1$,306$_2$**. A key k may form the start state of the (in this example three) LFSRs $\{k_1,k_2,k_3,...,k_m\}$ and the linear stream cipher is linear for used keys k.

In this split-key cryptosystem encryption key e and first split-decryption key may be generated as a set of random bits $\{e_1,e_2,e_3,...,e_m\}$ and $\{d_{11},d_{12},d_{13}\ d_{1m}\}$ respectively and split-decryption key $d_2$ may be calculated as a bitwise XOR of e and $d_1$, i.e. $d_2 = e \oplus d_1$.

**Fig. 3(B)** depicts a non-linear stream cipher using one or more multiple linear feedback shift registers (LFSR) **308$_1$,308$_2$** (optionally comprising one or more preconfigured taps **310$_1$,310$_2$**) which may be combined using a partial non-linear "combination generator". Two or more LFSRs **308$_1$,308$_2$** may be configured to generate pseudo-random bit streams, where a key k may form the start state of the LFSRs $\{k_1,k_2,k_3,...,k_m\}$. One or more further LFSRs **312** may be configured as a non-linear "combination generator" **314** (selector).

In this particular embodiment, the output of a further LFSR is used to select which bit of the other two LFSRs is taken as the output **316** of the selector. The bits p $\{p_1,p_2,p_3,...,p_n\}$ defining the start state of the further LFSR may be pre-configured. As the stream cipher is linear in k, the decryption key may be calculated as a bitwise XOR of e and $d_1$, i.e. $d_2 = e \oplus d_1$. Also other partial non-linear functions may be used as a combination generator.

Stream ciphers form easy implementable symmetrical ciphers requiring keys of much shorter lengths when compared to the one-time path algorithm. The non-linear part of a partial non-linear combination generator makes the cipher more secure against certain types of attacks.

In a third embodiment, a split-key cryptosystem may be based on the asymmetrical encryption algorithm known as the RSA encryption scheme. In that case, an encryption/decryption key pair e,d using the following cipher algorithms:

- Randomly select two distinct prime numbers p and q of similar bit-length;
- Compute n = p*q;
- Compute $\varphi(n) = (p - 1)*(q - 1)$ wherein $\varphi$ is Euler's so-called totient function;
- Randomly select an integer e such that $1 < e < \varphi(n)$ and $gcd(e,\varphi(n)) = 1$ (i.e., e and $\varphi(n)$ are coprime);
- Determine d by calculating the multiplicative inverse of e (mod $\varphi(n)$), i.e.: $d = e^{-1}(mod\ \varphi(n))$.

The parameters $p,q,\varphi(n),e,d$ and n may be stored as secret information for further use if necessary. In particular, the value n needs to be shared with the content distributor and the CCU, as these entities require n to perform their encryption and decryption operations. The value n may be transferred to the content distributor and the CCU in protocol messages associated with a content transaction. In one embodiment, when multiple transactions use the same secret information, n needs to be communicated only once.

A content item X may be processed on the basis of an agreed-upon reversible protocol known as a padding scheme, which turns X into an integer x wherein $0 < x < n$. If the process determines that X is too long, it may divide X in blocks that each satisfies the length requirement. Each block is thereafter separately processed in accordance with the padding scheme.

The RSA encryption algorithm E for encrypting X into $X_e$ may be calculated as follows:

$$X_e = E_e(X) = x^e(mod\ n).$$

A split-key algorithm for determining a pair of split-decryption keys $d_1,d_2$ may comprise the steps of:

- selecting an integer $d_2$ randomly such that $1 < d_1 < \varphi(n)$ and wherein $d_1$ and $\varphi(n)$ are coprime;
- determining $d_2 = d_1^{-1} * d\ (mod\ \varphi(n))$.

A first decryption operation based on decryption algorithm D and split-encryption key $d_1$ may generate a "partially" decrypted content item by calculating $X_{e,d1} = D_{d1}(X_e)=(X_e^{d1})(mod\ n)$ (Read: $X_e$ to the power $d_1$ followed by a modulo n operation). A second decryption operation based on decryption algorithm D and split-encryption key $d_2$ may

generate $X_{e,d1,d2} = D_{d2}(X_{e,d1}) = (X_{e,d1}{}^{d2})(mod\ n)$. The original plaintext content item X may be derived from $X_{e,d1,d2}$ by applying the padding scheme in reverse.

Since the RSA encryption and decryption algorithms E and D are identical, the split-key algorithm for determining a pair of split-encryption keys $e_1,e_2$ may be determined on the basis of the same algorithm for determining the split-decryption keys.

The above double split-key RSA cryptosystem may be generalized to a multiple split-key cryptosystem with k keys. To that end, instead of selecting $d_1$ and $d_2$ such that $d_1 * d_2 = d\ (mod\ \varphi(n))$, k-1 random (preferably different) integers $d_1,...,d_{k-1}$ which are coprime with $\varphi(n)$ are determined and the final integer is computed as $d_k = (d_1 * ... * d_{k-1})^{-1} * d\ (mod\ \varphi(n))$. RSA encryption and decryption algorithms E,D are commutative, so the keys may be generated in any desired order and the encryption and decryption operations may be performed in any desired order.

In fourth embodiment, a split-key cryptosystem may be formed on the basis of the asymmetrical encryption algorithm known as the ElGamal (EG) encryption scheme. The EG scheme is based on the discrete logarithm problem rather than the factoring problem of RSA. In that case, encryption/decryption key pair e,d may be determined on the basis of the key generating algorithm:

- Select a large prime number p and a generator g that generates the multiplicative group {0, 1,..., p-1} mod p;
- Determine d by selecting a random number: $d \in \{1, ..., p-2\}$;
- Compute $h = (g^d)(mod\ p)$;
- Determine public key e = (p,g,h).

Note that e is called "public" because it could be published without leaking secret information. In one embodiment, e would be published to enable third parties (e.g. users that generate and upload user-generated content) to encrypt content for the system, while the content source remains in fully control over the (partial) decryption steps. However, when there is no need to publish e, it is kept private.

Decryption key d and (public) encryption key e = (p, g, h) - wherein p,g,h are integers - may be stored as secret information for future use if necessary. In particular, the value p needs to be shared with the content distributor and the CCU, as these entities require p to perform their encryption and decryption operations. The value of p may be included in protocol messages exchanged during a content transaction between a content source and a CCU. In one embodiment, multiple transactions may use the same secret information. In that case, p would need to be communicated to the content distributor and a CCU only once.

A content item X may be processed on the basis of an agreed-upon reversible protocol known as a padding scheme, which turns X into an integer x wherein $0 < x < p$. If the process determines that X is too long, it may divide X in blocks that each satisfies the length requirement. Each block is thereafter separately processed in accordance with the padding scheme.

Encryption algorithm $E_e(X)$ for encrypting content item X into $X_e$ may comprise the steps of:

- select a random number $s \in \{1, ..., p-2\}$;
- determining $X_e = E_e(X,s) = (Y_1,Y_2) = ((g^s)(mod\ p),(X * h^s)(mod\ p))$

Similarly, a decryption operation $D_d(Y_1,Y_2)$ for decrypting an encrypted content item $X_e$ may be computed as:

- $D_d(Y_1,Y_2) = (Y_1^{-d} * Y_2)(mod\ p)$ (which indeed equals
  $(g^{-ds} * h^s * X)(mod\ p) = X)$

A split-key EG algorithm for determining a pair of split-decryption key $d_1,d_2$ may comprise the steps of:

- determining $d_1$ to be a random number $d_1 \in \{1,...,p-2\}$;
- compute $d_2 = (d-d_1)\ mod\ p$.

The above-described double split-key EG cryptosystem may be generalized to a multiple split-key cryptosystem using k split-encryption keys. To that end, instead of choosing $d_1$ and $d_2$ such that $d_1 + d_2 = d\ mod\ p$, k-1 random integers $d_1... d_{k-1}$ smaller than p may be selected and the final integer may be computed as $d_k = d - (d_1 + ... + d_{k-1})\ (mod\ p)$.

A split-key EG algorithm for splitting the random encryption parameter s into *l* parts may be defined as follows:

- The first party selects a random number $s \in \{1, ..., p-2\}$;
- The first party chooses *l* random numbers $s_i \in \{1, ..., p-2\}$, $1 \leq i \leq l$, such that $s = (s_1 + s_2 + ... + s_l)\ mod\ p$ and sends $s_i$ to party i;
- Let $Y_1 = (h^{s1} * X)\ mod\ p$.

- For i = 1 to I-1 do
  Party i sends ($g^s$ mod p, $Y_i$) to party i+1;
  Party i+1 performs its encryption step:
  $Y_{i+1}$ := ($h^{si}$ * $Y_i$) mod p.

It may be easily verified that ($g^s$ mod p, Y,) = $E_e$(X, s), because s = ($s_1$ + $s_2$ + ... + $s_I$) mod p. The different encryption steps are commutative.

A first decryption operation on the basis of decryption algorithm D and $d_1$ may be used to "partially" decrypt encrypted content $X_e$ into $X_{e,d1}$ by calculating $D_{d1}(X_e) = D_{d1}(Y_1,Y_2) = (Y_1, Y_1^{-d1} * Y_2$ (mod p)). Partially decrypted content $X_{e,d1}$ is represented by a pair with the same first element $Y_1$. Since $Y_1$ is part of the encryption, it may be included in the protocol messages.

A second decryption operation on the basis of decryption algorithm D and $d_2$ may be used to determine the fully decrypted content by calculating $X_{e,d1,d2} = D_{d2}(X_{e,d1})$ wherein the second element of $X_{e,d1,d2}$ will equal x: $X_{e,d1,d2}$ = $D_{d2}(X_{e,d1})$ = $D_{d2}(D_{d1}(Y_1,Y_2))=(Y_1, Y_1^{-d2} * Y_1^{-d1} * Y_2)$(mod p)) = ($Y_1, (Y_1^{-d} * Y_2)$ (mod p)) = ($Y_1$, X). Original content item X may be determined from the calculated $X_{e,d1,d2}$ by applying the padding scheme in reverse.

The EG decryption algorithm D is commutative, so the decryption keys can be generated in any desired order and the decryption operations may be performed in any desired order. Similarly, the encryption algorithm is also communicative, so encryption keys may be generated in any desired order and the encryption operations may be performed in any particular order.

It is noted that the above-described RSA and EG split-key cryptosystems are multiplicative homomorphic, exhibiting the property $D(E(Z_1) * E(Z_2))=(Z_1 * Z_2)$(mod p).

An additive homomorphic cryptosystem exhibits the property $E_e(X_1) * E_e(X_2)=E_e(X_1 + X_2)$(mod p). In the context of signal processing such as watermarking, an additive homomorphic encryption scheme may provide advantageous properties in the sense that it allows embedding (adding) of a watermark into a content item in the encrypted domain using a simple algebraic operation, e.g. a multiplication. Embedding a watermark using an additive homomorphic split-key cryptosystem will be described hereunder in more detail.

In an embodiment, the split-key cryptosystem may be based on an additive homomorphic cryptosystem known as a Damgard-Jurik (DJ) cryptosystem. The DJ split-key cryptosystem system is described hereunder in more detail. The encryption/decryption pair e,d for the DJ cryptosystem may be generated using the following key generating algorithm:

- Select two large prime numbers p' and q' such that p = 2p'+1 and q = 2q'+1 are prime too and wherein n = p * q is defined as the modulus of the DJ system;
- Select a generator g that generates all squares of the multiplicative group {1,..., n-1} mod n. The group of all squares will have size T = p'* q';
- Select d as a random value d ∈ {1, ..., T-1} and compute h = $g^d$ mod n;
- Determine the (public) encryption key e = (n,g,h).

Note that e is called "public" because it could be published without leaking secret information.

In one embodiment, e would be published to enable third parties (e.g. users that generate and upload user-generated content) to encrypt content for the system, while the content source remains in full control over the (partial) decryption steps. When there is no need to publish e, it may be kept private.

The values p, q and d may be stored as secret information S together with public key e = (n,g,h). The value of n needs to be shared with the content distributor and the CCU, as these entities require n to perform their encryption and decryption operations. The value of n may be included in protocol messages exchanged during a content transaction between a content source and a CCU. In one embodiment, multiple transactions may use the same secret information. In that case n would need to be communicated to the content distributor and the CCU only once.

A content item X may be processed on the basis of an agreed-upon reversible protocol known as a padding scheme, which turns X into an integer x wherein 0 < x < n. If the process determines that X is too long, it may divide X in blocks that each satisfies the length requirement. Each block is thereafter separately processed in accordance with the padding scheme.

An encryption algorithm $E_e$(X) for encrypting content X into $X_e$ may comprise the steps of:

- selecting a random number r ∈ {0,..., n-1};
- computing g'=$g^r$ mod n and h'=$h^r$ mod n such that $X_e$ = $E_e$(X, r) = ($Y_1,Y_2$)=(g', $h'^n$ *$(n+1)^x$ mod $n^2$).

The decryption algorithm $D_d(Y_1,Y_2)$ for decrypting an encrypted content item $X_e$ may comprise the steps of:

- calculate H'= ($Y_2$ * $g'^{(-d*n)}$)(mod $n^2$)

determine $x = X_{e,d} = (H'-1) * n^{-1} \bmod n^2$

This indeed gives the desired result $X_{e,d} = D_d(Y_1,Y_2) = X$ because $H' = ((n+1)^x)(\bmod n^2) = (n * X+1)(\bmod n^2)$.

A split-key algorithm for determining a pair of split-decryption keys $d_1$ and $d_2$ may comprise the steps of:

- determine $d_2$ to be a random number $d_2 \in \{0,...,n-1\}$;
- compute $d_1 = (d - d_2) \bmod n$.

A split-key DJ algorithm for splitting the random encryption parameter r into *l* parts may be defined as follows:

- The first party selects a random number $r \in \{1, ..., p-1\}$;
- The first party chooses *l* random numbers $r_i \in \{1, ..., p-1\}$, $1 \leq i \leq l$, such that $r = (r_1 + r_2 + ... + r_l) \bmod n$ and sends $r_i$ to party i;
- Let $Y_1 = (h^{n*r1} * (n+1)^x) \bmod n^2$.
- For i = 1 to I-1 do
  Party i sends $(g^r \bmod n, Y_i)$ to party i+1;
  Party i+1 performs its encryption step:
  $Y_{i+1} = (h^{n*ri} * Y_i) \bmod n^2$.

It may be easily verified that $(g^r \bmod n, Y_l) = E_e(X, r)$, because $r = (r_1 + r_2 + ... + r_l) \bmod n$. The different encryption steps are commutative.

A first decryption operation on the basis of decryption algorithm D and $d_1$ may be used to "partially" decrypt" encrypted content $X_e$ into $X_{e,d1}$ by calculating $D_{d1}(X_e) = D_{d1}(Y_1,Y_2) = (Y_1,Y'_2) = (Y_1,(Y_1^{(-d1*n)}*Y_2)(\bmod n^2))$. Hence, "partially" decrypted content $X_{e,d1}$ is represented by the pair $(Y_1,Y'_2)$.

In one embodiment, if multiple transactions are based on the same secret information and the same random number r, then $Y_1$ does not change and may need to be communicated to the content distributor and the CCU only once.

A second decryption operation on the basis of algorithm D and $d_2$ may be used to determine the fully decrypted content by calculating $H' = (Y_1^{(-d2*n)} * Y'_2)(\bmod n^2)$ and $x = ((H'-1) * n^{-1}) \bmod n^2$. Indeed, $H' = (Y_1^{-(d2+d1)n} * Y_2) \bmod n^2 = (Y_2 * g'^{(-d*n)})(\bmod n^2)$ thus showing the correctness of the split-key algorithm.

The above split-key DJ cryptosystem may be easily generalized to a multiple split-key cryptosystem with k split-decryption keys. To that end, instead of choosing $d_1$ and $d_2$ such that $d_1 + d_2 = d \bmod n$, k-1 random integers $d_1... d_{k-1}$ smaller than n may be selected and the final integer may be computed as $d_k = d - (d_1 + ... + d_{k-1}) (\bmod n)$.

The DJ decryption algorithm D is commutative, so the decryption keys may be generated in any desired order and the decryption operations may be performed in any desired order. The same holds for the encryption algorithm. Moreover, the DJ split-key cryptosystem uses probabilistic encryption, which prevents eavesdroppers from recognizing the content.

The split-key cryptosystems described above are non-limiting examples of a family of split-key cryptosystems, wherein each split-key cryptosystem is defined by a predetermined an encryption and decryption algorithm E,D, a key generating algorithm for generating encryption and decryption keys e,d on the basis of secret information S; and, a split-key algorithm for splitting e and/or d into multiple split-encryption and/or split-decryption keys respectively.

One group of split-key cryptosystems may be defined by crypto-algorithms E and D, a split-key algorithm for generating encryption and decryption keys e,d on the basis of secret information S and a split-key algorithm using secret information S for multiple splitting of decryption key d into an arbitrary number of k split-decryption keys $d_1,d_2,...,d_k$ ($k \geq 2$) wherein an encrypted content item $E_e(X)$ is decrypted by applying a sequence of decryption steps on the basis of said split-decryption keys $d_1,d_2,...,d_k$, i.e. $D_{dk}(D_{dk-1}(...(D_{d2}(D_{d1}(E_e(X))...)) = D_{dk}(D_{dk-1}(...(D_{d2}(X_{e,d1})...)) = X$. Here $X_{e,d1,d2,...,dk}$ is a short notation of a predetermined sequence of decryption operations on encrypted content item $X_e$ using decryption algorithm D and split-decryption keys $d_1,d2,...,d_k$, respectively. In such split-key cryptosystem decryption operations associated with all split-decryption keys need to be executed on an encrypted content item $X_e$ in order to obtain clear text.

Another group of split-key cryptosystems may be defined by an encryption and decryption algorithm E, D, a split-key algorithm for generating encryption and decryption keys e,d on the basis of secret information S and a split-key algorithm using secret information S for multiple splitting of e into an arbitrary number of i split-encryption keys $e_1,e_2,...,e_i$ ($i \geq 2$) such that $D_d(E_{ei}(E_{ei-1}...(E_{e2}(E_{e1}(X))...)) = D_d(X_{e1,e2,...,ei})) = X$. Here $X_{e1,e2,...,ei}$ is a short notation of a predetermined sequence of encryption on plaintext content item X using encryption algorithm E and split-encryption keys $e_1,e_2,...,e_i$, respectively.

Yet another group of split-key cryptosystems may be defined by crypto-algorithms E and D, a split-key algorithm for generating encryption and decryption keys e,d on the basis of secret information S and a split-key algorithm using secret information S for multiple splitting of both e and d into an arbitrary number of i split-encryption keys $e_1,e_2,...,e_i$ and k split-decryption keys $d_1,d_2,...,d_k$ ($i,k \geq 1$ and $i+k > 2$) such that $D_{dk}(D_{dk-1}(...(D_{d2}(D_{d1}(E_{ei}(E_{ei-1}(...(E_{e2}(E_{e1}(X))...)))=$

$D_{dk}(D_{dk-1}(...(D_{d2}(D_{d1}(X_{e1,e2,...,ei}))=X.$

In some embodiments E and D may be different algorithms. In other embodiments, the encryption and decryption algorithms E and D may be identical, i.e. E=D, which allows multiple splitting of both e and d into an arbitrary number i split-encryption keys $e_1,e_2,...,e_i$ and k split-decryption keys $d_k,d_{k-1},...,d_1,$ such that $D_{dk}(D_{dk-1}(...(D_{d2}(D_{d1}(E_{ei}(E_{ei-1}(...(E_{e2}(E_{e1}(X))...))= E_{dk}(E_{dk-1}(...(E_{d2}(E_{d1}(E_{ei}(E_{ei-1}(...(E_{e2}(E_{e1}(X))...))= X_{e1,e2,...,eid1,d2,...dk}=X.$

In such split-key cryptosystem, there is no functional distinction between encryption keys e and decryption keys d. In some embodiments, the encryption and/or decryption algorithms may be commutative, i.e. they may be applied in any order always giving the same result. Such commutative property may be useful when split-keys are used in a different order as they are generated, or when they are used in an order that is unknown at the time of the generation of the split-keys.

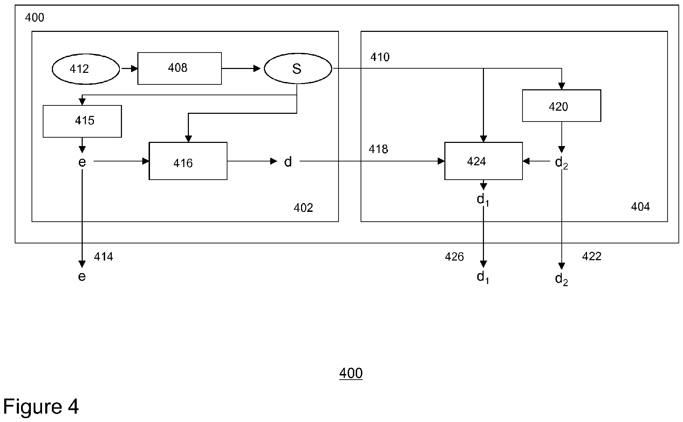

Fig. 4 depicts a schematic of a secret key generator **400** according to one embodiment of the invention. The secret key generator may comprise a cipher generator **402** for generating an encryption/decryption key pair e,d associated with cipher algorithms. In one embodiment, such cipher algorithms may comprise a predetermined (pseudo) random cipher algorithm **415,** a predetermined deterministic cipher algorithm **416** and a split-key generator **404** for generating split-keys on the basis of at least one of the encryption or decryption keys e,d and predetermined random and deterministic split-key algorithms **420,406.** The cipher generator and split-key generator may be configured to generate the keys required for a predetermined split-key cryptosystem, which will be described hereunder in more detail.

In the example of **Fig. 4,** the cipher generator may comprise a random generator **408** configured to generate random secret information S **410** on the basis of some configuration parameters **412,** e.g. the length of encryption key(s), the length of decryption keys, the length of to-be-generated random numbers. Secret information S may be used for generating a random encryption key e **414** on the basis of a random key generator **415.** A deterministic cipher algorithm **416** may use random encryption key e to generate decryption key d **418.** In some embodiments, secret information S may be used to generate a random decryption key d, which may be used by a deterministic cipher algorithm to generate encryption key e.

Secret information S and decryption key d may be used by split-key generator **402** to generate split-keys, e.g. split-encryption keys and/or split-decryption keys. To that end, secret information S may be input to a random split-key generator **420** in order to generate a random split-decryption key $d_2$ **422.** A deterministic split-key cipher algorithm **624** may generate a further split-decryption key $d_1$ **426** on the basis of d and $d_2$.

In another embodiment, the split-key generator may be configured to generate on the basis of secret information S and d, k split decryption keys $d_1,d_2,...,d_k$ (k≥2). In a further embodiment, split-key generator may be configured to receive secret information S and encryption key e in order to generate i split encryption keys $e_1,e_2,...,e_i$ (i≥2). In yet a further embodiment split-key generator may be configured to generate i split encryption keys $e_1,e_2,...,e_i$ and k split decryption keys $d_1,d_2,...,d_k$ (i,k≥1 and i+k≥2) on the basis of secret information S and encryption/decryption key pair e,d.

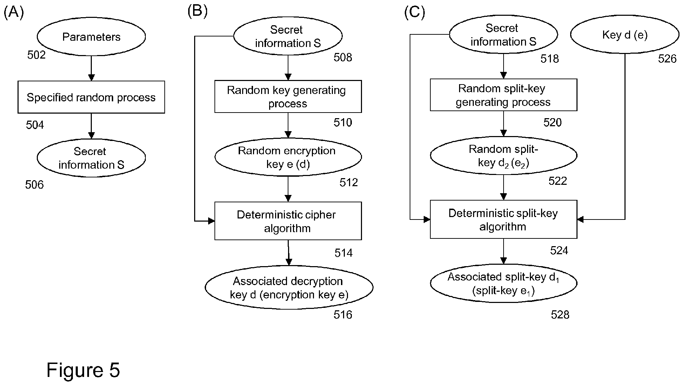

Fig. 5 depicts flow charts illustrating the generation of the encryption/decryption pair e,d and associated split-keys according to various embodiments of the invention. In particular, the flow charts correspond to the processes executed in the secret key generator as described with reference to **Fig. 4. Fig. 5(A)** depicts the generation of secret information S. In a first step **502** parameters are determined, like the lengths of keys or lengths of prime number that are to be generated. These parameters are used as input for a random process function **504.** The random process function may be a pseudo-random generator or a physical random generator based on a physical process, e.g. thermal noise, for producing secret information S. Based upon the seed and the specific cryptosystem the random generator may generate secret information S **506.**

Fig. 5(B) depicts the generation of encryption key e and decryption key d. The secret information S **508** may be used in a specific random process **510** associated with a specific cryptosystem for generating random encryption key e **512.** For example, when using the RSA cryptosystem (as described above), encryption key e may be determined on the basis of a process including the random selection two distinct prime numbers p and q and the subsequent random selection of an integer e such that $1 < e < \varphi(n)$ and $gcd(e,\varphi(n))=1$ wherein n=p*q.

Similarly, when using the EG cryptosystem (as described above), encryption key e may be determined on the basis of process including selection a large prime number p and a generator g that generates the multiplicative group {0, 1,...,p-1} mod p and subsequent determination of d by random selection from this group d ∈{1, ...,p-2}.

Then, on the basis of the random encryption key e and a predetermined deterministic cipher algorithm **514** associated with the cryptosystem, associated decryption key d **516** may be determined. For example, when using the RSA cryptosystem, decryption key is calculated as $d = e^{-1}(mod\ \varphi(n)).$ In some embodiments secret information S may also be used in the calculation of d. For example, in the above referred to RSA case, decryption key is calculated by using $\varphi(n)$, which is part of the secret information S.

In other embodiments, decryption key d may be determined on the basis of a certain random process and encryption key e may be calculated using a predetermined deterministic cipher algorithm (such as the EG or DJ cryptosystem).

Fig. 5(C) depicts the generation of split-keys $d_1$ on the basis of secret information S. Secret information S **518** may used by a specific random split-key generating process **520** associated with a specific cryptosystem thereby generating first split-key $d_2$ **522**. For example, when using the RSA cryptosystem (as described above), split-key $d_2$ may be determined on the basis the random selection of an integer $d_1$ such that $1 < d_1 < \varphi(n)$ and $\gcd(d_1, \varphi(n)) = 1$ (i.e. similar to the determination of e).

Thereafter, on the basis of $d_2$ **522** and d **526** (and - in some embodiments, on the basis of secret information S) associated split-key $d_1$ **528** may be determined using a deterministic split-key algorithm **524**. For example, in the RSA case the associated split-key may be calculated as $d_1 = (d_2^{-1} * d)(\mod \varphi(n))$.

Hence, from the above it follows that various symmetric and asymmetric cryptosystem may be used in combination with a split-key algorithm allowing multiple splitting of decryption and/or encryption keys d and e respectively. These split-key cryptosystems may be implemented in content delivery systems as described in this disclosure.

Table 1 provides a comprehensive overview of key information and part of the secret information S, which needs to be distributed to the CS, the CD and the CCU for the different cryptosystems. From this table, it follows that for the split-key RSA, EG and DJ cryptosystems not only the split-keys $d_1$ and $d_2$ but also part of the secret information S, i.e. n (RSA and DJ) and p (EG), are sent to the CD and the CCU respectively.

This information may be sent in a suitable "encryption container" to the entities in the content distribution system. In particular, it may use a so-called split-encryption control message (SECM) to send encryption information to a specific entity configured for (partially) encrypting a content item (e.g. an encryption module associated with the CS) and a split-decryption control message (SDCM) to send decryption information to as specific entity configured for (partially) decrypting a content item (e.g. a CDN of CCU decryption module).

Table 1: overview of the information used by the encryption algorithm in the CS and decryption algorithm in the CD and CCU.

| Cryptosystem ↓ | Key info S → CS | Key info S → CD | Key info S → CCU |
|---|---|---|---|
| **One-time pad** | e = long sequence of random bits | $d_1$ = long sequence of random bits | $d_2$ = long sequence of random bits |
| **LFSR-based** | e = LFSR description (initial state, taps, combining functions like ASG (Alternating Step Generator), ...) | $d_1$ = LFRS description | $d_2$ = LFRS description |
| **RSA** | p, q {n = p * q} e, d | n, $d_1$ | n, $d_2$ |
| **ElGamal** | p, g, d {h = $g^d$ mod p}, s = random integer of size p | p, $d_1$ | p, $d_2$ |
| **Damgard-Jurik** | p, q, g, d {n=p*q; h = $g^d$ mod n}, r = random integer of size n | n, $d_1$ | n, $d_2$ |

Other embedding functions may be used in order to efficiently watermark a content item in the encrypted domain. For example, in further embodiments embedding of a watermark in an encrypted content item may be achieved using the homomorphic properties of a homomorphic split-decryption cryptosystem as described above. For example, the above-described RSA and ElGamal split-key cryptosystem is multiplicative homomorphic and the Damgard-Jurik split-key cryptosystem is additive homomorphic. Embedding a watermark in a content item using an homomrphic split-key system described hereunder in more detail.

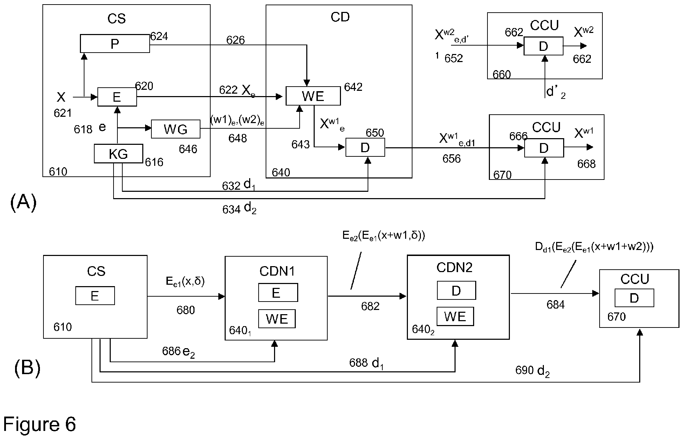

**Fig. 6(A)** depicts a schematic of a content delivery system comprising a homomorphic split-key cryptosystem configured for watermarking encrypted content according to another embodiment of the invention. The content delivery system may comprise a content source CS **610** associated with a pre-processing function for generating replacement information, a secret key generator **616** for generating and distributing keys for encrypting a content item and partially decrypting an encrypted content items X and an encryption unit **620** associated with an encryption algorithm E for encrypting a content item on the basis of an encryption key e into encrypted content item $X_e$. The content delivery system may further comprise at least one content distributor CD **640** for delivering encrypted and watermarked content items to CCUs, wherein the content distributor comprises at least one embedding function WE **642** for embedding a watermark w1 in a content item X in the encrypted domain and at least one decryption unit **650** for receiving a first partial decryption key $d_1$ **632** from the secret key generator for partially decrypting the encrypted (and watermarked) content item $X^{w1}_e$ **643** into partially decrypted and watermarked content item $X^{w1}_{e,d1}$ **656** before it is delivered to the CCU of a consumer. A CCU **660,670** may comprise a decryption unit **662,666,** which is configured to receive a second partial decryption key $d_2$ **634** for fully decrypting $X^{w1}_{e,d1}$ into watermarked content item $X^{w1}$ **668.**

In this particular embodiment, the split-key cryptosystem is based on an homomorphic encryption algorithm, in particular an additive and/or multiplicative homomorphic encryption algorithm, so that a watermark may be embedded into the encrypted content item using a simple algebraic operation. For example, when using additive homomorphic split-key cryptosystem, multiplying an encrypted perturbable data unit $E_e(x_i)$ with an associated encrypted perturbation $E_e(\delta)$ may result in an encrypted perturbed data unit $E_e(x_i+\delta)$, i.e. an encrypted data unit wherein the perturbation is added to the perturbable data units in the encrypted domain. In one embodiment, the additive homomorphic split-key cryptosystem may be a Damgard-Jurik split-key cryptosystem.

A similar effect may be achieved using a multiplicative homomorphic split-key cryptosystem such as the RSA or the ElGamal split-key cryptosystem. In that case multiplication of encrypted perturbable data unit $E_e(x_i)$ with an associated encrypted perturbation $E_e(\delta)$ may result in an encrypted perturbed data unit $E_e(x_i{}^*\delta)$.

The pre-processing function **624** may be configured to pre-process a content item X and associated encrypted content item $X_e$ in order to generate position information associated with perturbable data units in the encrypted content item in a similar way as described with reference to **Fig. 2** above. However, in contrast with the embodiment in **Fig. 2,** the pre-processing function does not need to generate encrypted perturbed data units which can be used by the embedding function to replace predetermined encrypted perturbable data units.

Once the content item is pre-processed and encrypted, the encrypted content item **622** and the associated position information **626** associated with perturbable data units in the encrypted content item $X_e$ may be sent to the content distributor. For example, the position information may identify the positions of four perturbable data units $\{E_e(x_1),E_e(x_2),E_e(x_3),E_e(x_4)\})$ which can be used by an embedding function for embedding a watermark.

When a consumer requests a content item from the content source, a watermark generator WG **646** in (or associated with) the content source, may generate an identifier e.g. a predetermined sequence of bits, for embedding as a watermark w1,w2 in a content item. On the basis of the identifier and encryption key e **618,** the watermark generator may generate encrypted one or more perturbations $E_e(\delta1),E_e(\delta2),...$ **648** for the embedding function. The embedding function of the content distributor may use the one or more perturbations and the position information in order to embed the watermark in the content item in the encrypted domain using the homomorphic properties of the split-key algorithm. The embedding function may for example introduce a perturbation in a perturbable data unit by multiplying an homomorphic encrypted perturbable data unit in the encrypted content item with an homomorphic encrypted perturbation: $E_e(X_i)_e * E_e(\delta) = E_e(x_i+\delta)$. The formation of a watermark w1 in an encrypted content item by embedding a sequence of encrypted perturbations in the encrypted content on the basis of an additive homomorphic algebraic operations may be represented in short by the expression: $E_e(X) * E_e(w1)= E_e(X+w1)= X^{w1}{}_e$ wherein $E_e(w1)$ represents one or more encrypted perturbations which are used for embedding watermark w1 into the content item X.

The thus watermarked and encrypted content may be further processed in a similar way as described with reference to **Fig. 2,** i.e. the key generator may distribute a first split-decryption key $d_1$ **632** to the content distributor in order to partially decrypt watermarked encrypted content $E_e(X+w1) = X^{w1}{}_e$ **643** into partially decrypted watermarked content item $D_{d1}(E_e(X+w1)= X^{w1}{}_{e,d1}$ **656;** and, the key generator may distribute a second split-decryption key $d_2$ **634** to the CCU **670** of the consumer in order to enable the decryption unit **666** in the CCU to perform the second and last decryption step which is needed in order to fully decrypt the partially decrypted and watermarked content item $X^{w1}{}_{e,d1}$ **456** into a (fully) decrypted watermarked content item $X^{w1}$ **668.**

It is submitted that the sequence of embedding a watermark and decryption by the content distributor is not limited to the process depicted in **Fig. 6.** In another embodiment, upon a request for content from a CCU, the content distributor may first apply a split decryption step in order to generate a partially decrypted content item $D_{d1}(X_e)=X_{e,d1}$ which is subsequently forwarded to the embedding function for watermarking. In this case, the perturbations need to be encrypted with encryption key e and subsequently decrypted on the basis of split-decryption key so that partially decrypted perturbations $D_{d1}(E_e(\delta))= \delta_{e,d1}$ are generated The embedding function may for example introduce a perturbation in a perturbable data unit by multiplying an homomorphic partially decrypted perturbable data unit in the encrypted content item with an homomorphic partially decrypted perturbation: $D_{d1}(E_e(x_i))* D_{d1}(E_e(\delta)) = D_{d1}(E_e(X_i+\delta))$.

Further, in situations where the content is encoded on the basis of entropy, insertion of a perturbation in the encoded payload of a data unit may have a large impact on the way the payload is displayed. Hence, in that case, the pre-processing functions needs to identify specific perturbable data units, which comprise a payload which allows the addition of a perturbation which is not perceptible when displayed, and sent this as location information to the content distributor. In other situations however, the encoding of a data unit may be less sensitive to insertion of a perturbation in the payload. For example, when a content item is formatted on the basis of IPCM frames using linear RGB coding, adding a perturbation to the payload of a data unit may not be perceptible when it is displayed. Hence, in that case, a perturbation may be added to a data unit without examining in advance whether the payload is particularly suitable for embedding a perturbation. Such embodiment provides the advantage that the content does not need to be pre-processed and embedding of a watermark does not require the use of position information on perturbable data units. In that case, the content distributor or the embedding function itself may select encrypted data units for embedding the watermark.

Hence from the above it follows that, the homomorphic properties of the split-key cryptosystem may be used to efficiently generate an encrypted watermarked content item $X^{w1}{}_e$ by embedding a watermark w1 on the basis of a set

of encrypted perturbations $E_e(w1)$ into encrypted content item $X_e$ using a simple algebraic process (e.g. multiplication). In some embodiments, no position information is required for embedding the watermark so that watermarking in the encrypted domain is possible without pre-processing a content item.

Further, the encrypted content $X_e$ stored with the content distributor cannot be decrypted, neither by the content distributor, nor by a consumer having a split-decryption key. Moreover, as the watermark is only added upon a consumer transaction, multiple CDNs could get the same encrypted version $X_e$. This may save pre-processing efforts in CDN interconnect scenarios in which a content source uses multiple content distributors (in parallel or cascade) to deliver the content to consumers, as the pre-processing needs to be performed only once per content item instead of once per content item / content distributor combination.

**Fig. 6(B)** depicts a schematic of a content delivery system comprising a homomorphic split-key cryptosystem implemented in a cascaded CDN network for delivering content to CCUs. In this particular example, the homomorphic split-key system may be configured to generate multiple split-encryption keys and split-decryption keys, e.g. $e_1, e_2, d_1, d_2$.

For example, in an embodiment, the content source **610** may partially encrypt a content item X into a partially encrypted content item $E_{e1}(X)$ and partially encrypt one or more perturbations in partially encrypted perturbations $E_{e1}(\delta)$ on the basis of split-encryption key $e_1$. These data $E_{e1}(X,\delta)$ **680** may be sent to a first CDN1 **640₁,** comprising a first watermark embedding module and an encryption unit. In some embodiments, these data may further include position information associated with perturbable data units in the partially decrypted content item. The partially encrypted perturbations may be embedded into the partially encrypted content item using a homomorphic algebraic operation in order to form a partially encrypted watermarked content item $E_{e1}(X+w1)$ comprising a first watermark associated with CDN1.

The encryption unit may be used to further encrypt the partially encrypted watermarked content item $E_{e1}(X+w1)$ on the basis of a further split-encryption key $e_2$ into encrypted watermarked content item $E_{e2}(E_{e1}(X+w1))$, before it is sent to a further, second CDN2. As the second CDN2 **640₂** also comprises a watermark embedding module, CDN1 **640₁** may also encrypt the partially encrypted perturbed data units $E_{e1}(\delta)$ in to (fully) encrypted perturbations $E_{e2}(E_{e1}(\delta))$ and send these encrypted perturbations along with the encrypted watermarked content item $E_{e2}(E_{e1}(X+w1,\delta))$ **682** to the second CDN2.

The second CDN2 may comprise a second watermark embedding module which may embed the partially encrypted perturbations in the partially encrypted watermarked content item using a homomorphic algebraic operation so that a partially encrypted watermarked content item $E_{e2}(E_{e1}(X+w1+w2))$ is obtained wherein a first part w1 of the watermark is associated with the first CDN1 and a second part w2 of the watermark is associated with the second CDN2.

A decryption unit in CDN2 may partially decrypt the fully encrypted watermarked content item $E_{e2}E_{e1}(X+w1+w2)$ into a partially decrypted watermarked first content item $D_{d1}(E_{e2}(E_{e1}(X+w1+w2)))$ **684,** before it is sent to the CCU. The requesting CCU may comprise a decryption module and receive the second split-decryption key $d_2$ in order to fully decrypt the partially decrypted watermarked content item $D_{d2}(D_{d1}(E_{e2}E_{e1}(X+w1+w2)))=X+w1+w2$.

Hence, in this scheme, the content item and the perturbations are sent in encrypted form to a first CDN1, are processed and subsequently forwarded to a second CDN2, which may use the encrypted perturbations to watermark the content item in the encrypted domain. In one embodiment, a CDN may be configured to send and receive perturbations to and from other CDNs (in advance) over an inter-CDN interface. This interface may also be used by CDNs to exchange information on the watermarking and/or the split-key cryptosystem, including information on the type of encryption algorithm used, a seed for generating (split) encryption keys, a watermarking policy, etc.

It is submitted that may other variants are possible within leaving the scope of the invention. For example, the system in **Fig. 6(B)** may be implemented on the basis of a split-key cryptosystem wherein the content source is sending encrypted content to the first CDN1 comprising a decryption unit and wherein decryption of the encrypted content is performed on the basis of at least three consecutive decryption steps using at least three split-decryption keys $d_1, d_2$ and $d_3$. Furthermore, the system in **Fig. 6(B)** may be extended to a network of multiple CDN, which are configured to watermark and encrypt content items in accordance with the invention.

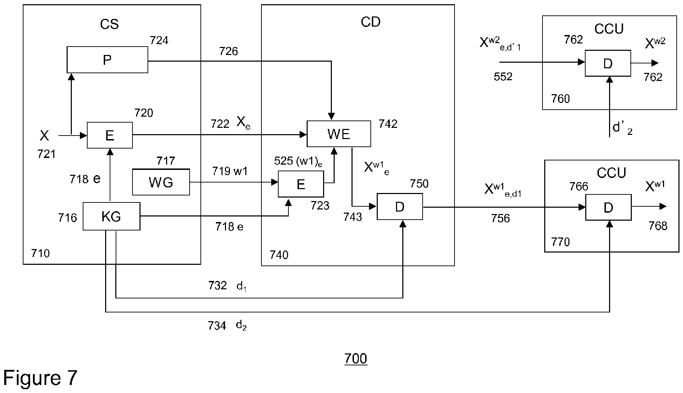

**Fig. 7** depicts a schematic of a content delivery system comprising a split-key cryptosystem configured for watermarking encrypted content according to yet another embodiment of the invention. **Fig. 7** depicts a content delivery system similar to the one described with reference to **Fig. 6** with the exception that the generation of the encrypted perturbations is outsourced to a third party, in this embodiment to the content distributor. In that case, the content distributor may comprise (or be associated with) a watermark encryptor for generating encrypted perturbations or partially decrypted perturbations.

Hence, in this particular embodiment, the pre-processing function **724** in the content source **510** may pre-process a content item X **721** in order to generate position information associated with perturbable data units in the encrypted content item. The position information may be sent as replacement information **726** to the embedding function **742** of the content distributor **740**. Similarly, the content item X may be encrypted by an encryption unit **720** on the basis of a public encryption key e **718** of the additive homomorphic split-key cryptosystem and sent the content distributor.

Then, if the content item is requested by a consumer, a watermark generator **719** associated with the content source may send a watermark w1 **719** to the watermark encryptor **723** of the content source. Using the watermark and the public encryption key e, the watermark encryptor may generate one or more encrypted perturbations $E_e(\delta)$ **725,** which are used by the embedding function for generating encrypted watermarked content item $X^{w1}_e$ **743** wherein the additive homomorphic properties of the split-key cryptosystem are used to add the a sequence of perturbations forming the content item in the encrypted domain in a similar way as described with reference to **Fig. 6.** Once the encrypted content is watermarked, it is transformed in partially decrypted watermarked content item $X^{w1}_{e,d1}$ **743** using a first split-decryption key $d_1$ **732** before it is sent to the decryption unit **766** of the CCU **770,** which uses a second split-decryption key $d_2$ **734** to fully decrypt the partially decrypted watermarked content item $X^{w1}_{e,d1}$ into watermarked content item $X^w$ **768.**

Hence, the properties of the additive homomorphic split-key cryptosystem allows the outsourcing of the generation of encrypted perturbations which are used in the watermark embedding process to a third party, e.g. the content distributor, as even with the public encryption key e a content distributor cannot decrypt the non-watermarked encrypted content item $X_e$. This way, encrypted perturbations and identifier, e.g. a content identifier, may be generated by the third party and used by that third party to inserted a watermark into an encrypted content item upon request of that content item by a consumer. Such implementation reduces processing time at the side of the content source and it reduces the traffic between the content source and the content distributor as encrypted perturbations typically comprise more bits than the identifier itself. It further allows that watermarks are generated locally by the content distributor, thereby even further reducing the traffic between the content source and distributor when compared with the embodiment described with reference to **Fig. 6.**

The content delivery systems described above with reference to **Fig. 2-7** provides the advantage that the content distributor is in control of the generation of an encrypted watermark which may be efficiently added to the encrypted content using the homomorphic properties of the DJ split-key cryptosystem. Hence, in that case there may be a potential security threat if a rouge employee of the content distributor would be able to insert "zero" watermarks (w=0) into the content thereby effectively resulting in decryptable content without a watermark. When colluding with a consumer with a decryption key, this way a decrypted, non-watermarked version of the content could be obtained.

This problem may be solved by "forcing" a content distributor to embedded a predetermined watermark in the content item X. This may be achieved using a special watermarking scheme in combination with an additive homomorphic split-key cryptosystem according to an embodiment of the invention.

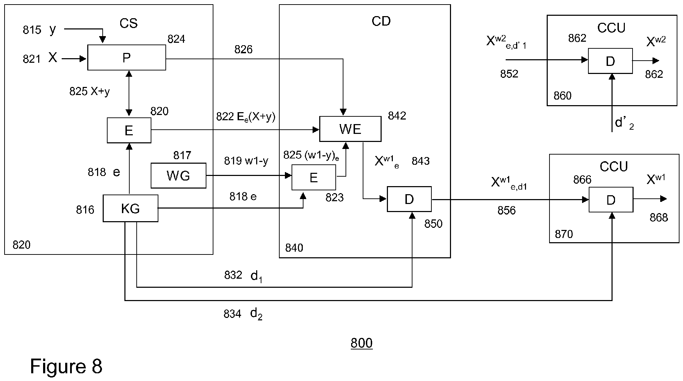

**Fig. 8** depicts a schematic of a content delivery system comprising a split-key cryptosystem configured for watermarking encrypted content according to an embodiment of the invention.

In this particular embodiment, the content source **810** may execute a pre-processing function **824** to determine the position information of perturbable data units, i.e. content parts in the encrypted content item that are suitable for watermarking and which are going to be used for embedding part of a watermark. Based on the position information, the content source (or in particular the pre-processing function associated with the content source) may add display distortion information y **815** to the content item so that a distorted content item X+y **818** is formed. The display distortion information in the distorted content item will distort the display of the content in such a way that it is not suitable for content consumption. The display distortion information y is inserted at the positions of the perturbable data units. Further, the distorted content item is encrypted on the basis of public encryption key e **818** into an encrypted distorted content item $E_e(X+y)$ **842,** which is subsequently sent to the content distributor **840.**

Further, a watermark generator WG **817** associated with the content source may generate perturbations for embedding a watermark w1 in the content item and subtract the display distortion information y from the perturbations resulting into a first compensating perturbations for embedding a watermark w1-y **819** in the content item. The compensating perturbations are sent to the watermark encryptor **823** of the content distributor, which encrypts the compensating perturbations into encrypted compensating perturbations. The encrypted compensating perturbations used for embedding a watermark w1 in the content item may be denoted in short as: $E_e(w1-y)$.

An embedding function **842** may combine the encrypted distorted content item $E_e(X+y)$ with the first encrypted compensating perturbations $E_e(w1-y)$ using an homomorphic addition into encrypted watermarked content item $X_e^{w1}$ **843.** Thereafter, the content is processed in a similar was described with reference to **Fig. 7,** i.e. the encrypted watermarked content item $X_e^{w1}$ is partially decrypted by decryption unit **850** into partially encrypted watermarked content item $X_{e,d1}^{w1}$, sent to the decryption unit **866** of the CCU, which fully decrypts $X_{e,d1}^{w1}$ into watermarked content item $X^{w1}$. Hence, this embodiment provides the advantage that it is not possible for a rogue employee of a content distributor to add "zero" watermarks to the content in the encrypted domain as the combination of $E_e(0)$ and $E_e(X+y)$ results in $E_e(X+y)$ which - once decrypted - results in distorted content item X+y. A content distributor is therefore forced to watermark the content on the basis of a predetermined set of compensating perturbations.

As already shortly referred to above, selection of data units comprising a payload which is suitable for carrying a perturbation which is not perceptible when displayed, may depend on the protocol and/or codec's used for delivering content to the CCUs. For example, when an MPEG-type protocol is used, the consecutive pictures of a video are coded in I,P and B frames, wherein an I (intra) frame is an image which is processed on a spatial basis, wherein a P (predicted) frame is predicted from an I-frame or another P-frame and processed in a temporal way using a technique known as motion compensation; and, wherein an B (bi-directional) frame is not only predicted by its predecessor (like a P frame) but also by its successor.

Encoding of an I-frame consists of a number of consecutive steps, which are well-known in the art. First a video filter transforms RGB pixels represented by bit values, e.g. an 8-bit value, for each primary colour to an YCbCr presentation where Y is the luminance signal. A Discrete Cosine Transform (DCT) transforms a block, e.g. an 8 by 8 or a 16 by 16 block, of pixels to a block of weighting values, e.g. 12-bit weighting values, similar to the discrete Fourier transform. The first weighting value, called the DC value, corresponds to a solid luminance or colour value for the entire block and the remaining lower frequency DCT coefficients correspond to smoother spatial contours.

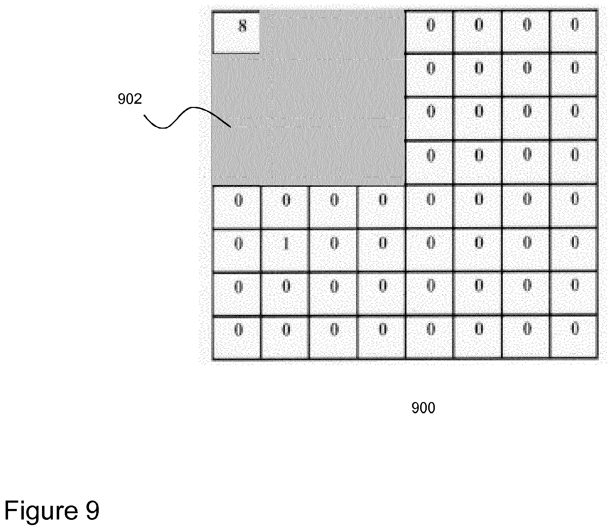

Each DCT value is quantized (compressed) by dividing it by a quantization value and rounding the result to the nearest integer. After quantization many DCT values, especially the ones corresponding to high frequencies, will be zero, which allows for further efficiency in the coding. For example, run-length variable length coding (VLC) may be used to encode likely (small) coefficient values by a small number of bits. Encoding of the P and B frames is a little more complicated but also results in a matrix of DCT coefficients, e.g. a 8 by 8 matrix of DCT coefficients **900,** as depicted in **Fig. 9.** In this embodiment, the low-frequency coefficients are located in the top-left corner and the high-frequency coefficients are located in the bottom right corner.

A suitable location for inserting watermarks in (encrypted) MPEG videos may be one or more low frequency DCT coefficients (excluding the first so-called DC value) of the I frames. In an embodiment, one or more of the 14 low frequency DCT coefficients **902** (indicated in gray in **Fig. 9**) may be selected for insertions of part of a watermark. In another embodiment, one or more of the 28 low frequency DCT coefficients may be used. These coefficient values are sufficiently high to be slightly modified without being noticed; and, the biggest compression gain through run-length VLC is in the remaining high-frequency DCT values (for this reason the B and P frames are less suitable).

Hence, from the above it follows in one embodiment, one or more predetermined (low frequency) DCT coefficients associated with an MPEG frame, preferably an I-frame, may be identified during the pre-processing of the content item as perturbable data units. The positions of these low frequency coefficients in the content item may be sent as position information to a content distributor. Similarly, the one or more low frequency DCT coefficients in a content item may be used for insertion of display distortion information in order to generate a distorted content item as described above with reference to **Fig. 8.** Such scheme may be implemented in combination with any suitable embodiment described in this disclosure.

In the embodiments of **Fig. 2-8,** the content source may encode and compress a plaintext content item of a raw video data format into an encoded and compressed content item, e.g. an MPEG movie, and encrypt it so that it can be securely send to the content distributor, which may embed a watermark in the content item in the encrypted domain and so that the consumer is able to decrypt the encrypted content item and obtain a watermarked content item.

Further, the content source may pre-processes the content before it is ingested by the content distributor wherein the pre-processing may include the determination of the locations of perturbable data units, i.e. data units in the (encrypted) coded content item, which are suitable for embedding a perturbation.

In one embodiment, "embedding" may comprise replacing one or more encrypted perturbable data units with one or more encrypted perturbed data units each comprising a perturbation. In another embodiment, "embedding" may comprise combining (e.g. adding) one or more encrypted perturbations with one or more encrypted perturbable data units on the basis of a homomorphic algebraic operation.

The use of homomorphic cryptosystem such as the DJ split-key cryptosystem may cause a factor of two in the amount of data transmitted (as e.g. 1024 bit plaintext is encrypted into a 2048 bit cipher text). However, an homomorphic cryptosystem is in principle only required for the data units that are designated to be watermarked in the encrypted domain.

Hence, in some embodiments, the content source may split a content item X in a common, non-perturbable content item $X_1$ comprising data units which are not designated as perturbable and a perturbable content item $X_2$ comprising data units of which at least part is designated as perturbable. In that case, common content item $X_1$ may be encrypted by a fast and efficient cryptosystem, e.g. EAS or a symmetric (split-key) stream cipher, and the perturbable content item $X_2$ may be encrypted using a homomorphic split-key cryptosystem. Thus, in this embodiment, the content is split in at least a first and second part wherein only the first part of the content item comprises perturbable data units that are encrypted in accordance with a homomorphic split-key cryptosystem. The data units of the content item may be encrypted using another encryption scheme, e.g. AES or a symmetric (split-key) stream cipher. This way the processing of data and the traffic between the entities in the content delivery system can be substantially reduced.

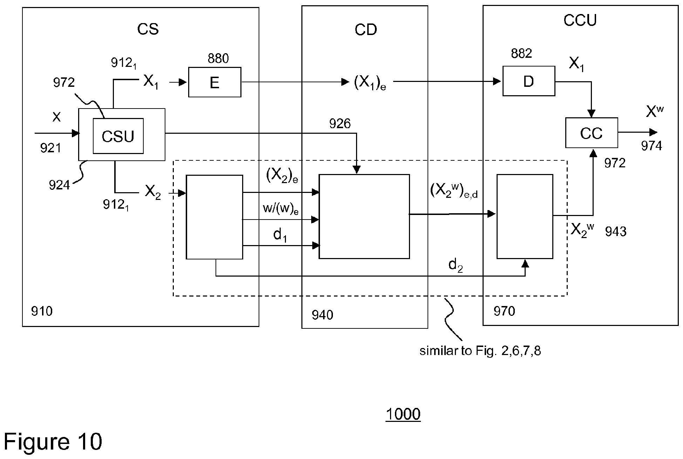

**Fig. 10** depicts a schematic overview of a content delivery system according to an embodiment of the invention wherein the content item is split in a common part and a to-be-watermarked part. In particular, **Fig. 10** depicts a content source **1010,** a content distributor **1040** and a CCU **1070** which may be implement in accordance to any of the embodiments as described with reference to **Fig. 2-8** above. Further, the content source may comprise a content splitting unit (CSU) **1072** for splitting content item X **1012** into a common content item $X_1$ **$1012_1$** and a perturbable content item $X_2$ **$1012_2$**. In an embodiment, the content splitting unit may be part of the pre-processing function **1024** of or associated with the content source.

Hence, in this embodiment, the content source may pre-process the content item X in order generate position information **1026** associated with perturbable data units. Further, on the basis of the position information, the content splitting unit may split the content in a common content item $X_1$ and a perturbable content item $X_2$. Examples of perturbable data units may include e.g. DCT coefficients in MPEG2-encoded video or IPCM frames in an H.264-encoded video as used with HD DVD, Blu-ray Discs, and (internet) streaming. Some embodiments associated with perturbable data units will be discussed hereunder in more detail.

The content source may distribute the common content item $X_1$ via the content distributor to the consumer. The common content item $X_1$ may be encrypted by an encryption unit **880** on the basis of an efficient cryptosystem, e.g. the well-known Advanced Encryption Standard (AES) or a derivative thereof or a symmetric split-key stream cipher (e.g. described with reference to **Fig. 3**) and distributed via the content distributor in encrypted form to the CCU. In the CCU, a decryption unit **1082** associated with encryption unit **1080** may subsequently decrypt the common content item into a plain text common content item $X_1$.

Similarly, the perturbable content item $X_2$ may be encrypted, watermarked, distributed and decrypted (by the CCU) into plaintext watermarked (perturbed) content item $X^w_2$ using any of the embodiments described with reference to **Fig. 2-8.**

A content combiner (CC) **1072** in the CCU may subsequently combine the watermarked and common content item into a watermarked content item $X^w$ **1074**. Hence, this particular embodiment provides the advantage that most part of the content item is encrypted and distributed in accordance with an efficient cryptosystem, which does not increase the traffic between the content source, content distributor and CCUs. Only a relative small part (e.g. 1 Mb of a 1 Gb video file) is encrypted using an homomorphic split-key cryptosystem thereby reducing the data traffic.

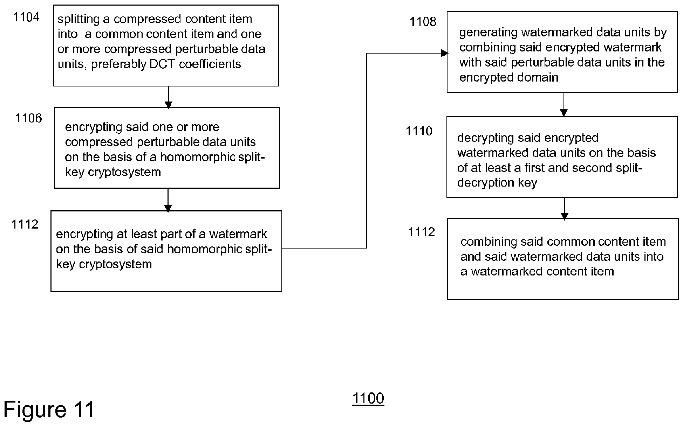

**Fig. 11** depicts a process flow associated with the process of delivering a compressed encrypted watermarked content item according to an embodiment of the invention. The process may start with coding the content item in a compressed content item (step **1102**), for example raw video data of a movie comprising a sequence of video frames into a predetermined coding format. In one embodiment, the coding format may comprise I,P and B frames according to the MPEG standard. Further a video filter may be applied to the frames in order to change the RGB coding into an associated YCbCr coding. Moreover, a DCT coding may be applied in order to transform pixel blocks of a predetermined size (e.g. 8 by 8 blocks of pixels) to a block of DCT coefficients whereby each coefficient is scaled (quantized) according to an appropriate value.

Thereafter, in a further step **1104,** the content splitting unit of the content source may split the DCT coded content item into a common content item $X_1$ and a perturbable content item $X_2$ comprising a predetermined number of perturbable data units. In one embodiment, the perturbable data units may relate to one or more DCT coefficients in different DCT blocks. These selected DCT coefficients, which may be structured in a data structure (hereafter referred to as a watermarking (W) block), are not run-length encoded using VLC. Optionally, in an embodiment, the remaining part, the common content item (comprising the quantized DCT coefficients of P- and B-frames and the quantized DCT coefficients of the I-frames that are not part of the W-block) may be further compressed. For example, in one embodiment, using e.g. a run-length encoding scheme.

The split content item may then encrypted and delivered to the CCU in a similar way as described with reference to **Fig. 10:** the compressed common content item may be encrypted in accordance with a predetermined cryptosystem, e.g. AES or a (split-key) stream cipher, and the W-block may be encrypted on the basis of a homomorphic split-key cryptosystem (step **1106**).

For example, when using the DJ split-key cryptosystem, each DCT coefficient $x_i$ may be encrypted into $E_e(X_i,r_i)$ wherein $x_i$ is the i-th quantized DCT coefficient and $r_i$ is the random number for the i-th coefficient used by the DJ encryption algorithm. The thus encrypted common content item and the encrypted W-block may be sent to the content distributor.

Then, once a consumer decides to buy content item X, the content may generate an identifier, e.g. a transaction identifier, and - on the basis of the the identifier - generate an encrypted watermarked W-block by adding encrypted perturbations to the encrypted W-block using the homomorphic properties of a homomorphic split-key cryptosystem (step **1110**). The encrypted watermarked W-block, in particular the encrypted perturbed DCT coefficients in the W-block, may be partially decrypted by a decryption unit using a first split-decryption key $d_1$.

The content distributor may then send the two encrypted content items, the encrypted common content item and the partially decrypted watermarked W-block, to the CCU, which may fully decrypt the partially decrypted perturbed W-block on the basis of a second split-decryption key and decrypt the common content item on the basis of a suitable decryption key. Thereafter, it may combine the perturbed DCT coefficient in the perturbed W-block with the plaintext common content item into a non-compressed plaintext watermarked content item (step **1112**).

Alternatively, in one embodiment, the CCU may generate a watermarked compressed MPEG movie. To that end, the combiner unit in the CCU may for each DCT-coefficient in the W-block perform the steps of: decode the run-length encoded VLC blocks of the common content item into DCT blocks; insert the perturbed DCT coefficients; and, recode the complete set of DCT blocks by run-length encoding into a watermarked and compressed content item so that the CCU is able to play it using a suitable video player, e.g. an MPEG player.

It is noted that the process flow of **Fig. 11** may be extended on the basis of the watermarking scheme as discussed with reference to **Fig. 8.** In particular, when the content splitting unit of the content source has identified the perturbable data units (i.e. the perturbable DCT coefficients $x_i$), distortion information $y_i$ may be added to the perturbable data units thus forming distorted perturbable data unit $x_i+y_i$. The distorted perturbable data unit may be encrypted on the basis of a homomorphic split-key encryption scheme. For example, when using the DJ split-key cryptosystem, each DCT coefficient may be encrypted into an encrypted distorted perturbable data unit $E_e(x_i+y_i,r_i)$ wherein $x_i$ is the i-th quantized DCT coefficient, $y_i$ is the distortion value for the i-th coefficient and $r_i$ is the random number for the i-th coefficient used by the DJ encryption algorithm.

The content source may send the encrypted distorted data units (in this case encrypted distorted DCT coefficients) to the content distributor together with the DJ public key e=(n,g,h). Then, when a consumer wishes to buy the content item X from the content source, the content source may generate two DJ split-decryption keys $d_1$ and $d_2$ wherein the first split-decryption key is provided to the content distributor and the second split key is provided together with the DJ public key to the CCU of the consumer. The content source may then generate an identifier, e.g. content identifier, and - on the basis of the identifier - a set of perturbations may be generated which are corrected for the distortion information (in this example distortion information is subtracted from the distortion) thereby forming compensating perturbations $w_i-y_i$.

The content source may then encrypt the perturbations $w_i-y_i$ into encrypted perturbations $E_e(w_i-y_i)$ on the basis of the DJ crypto cipher and the DJ public key e=(n,g,h). When an encrypted compensating perturbation is added to its associated encrypted distorted data unit, the distortion information is compensated (cancelled). The encrypted compensating perturbations are subsequently sent to the content distributor.

In an alternative embodiment, the content source may send the perturbations $w_i-y_i$ to the content distributor, which performs the encryption on the basis of the public key e.

The embedding function may subsequently add encrypted compensating perturbations $E_e(w_i-y_i)$ to the encrypted distorted perturbable data units, in this case encrypted distorted DCT coefficients, using a multiplication of the homomorphic encrypted distorted data units and compensating perturbations: $\{E_e(x_i+y_i)*E_e(w_i-y_i)\} \bmod n^2 = E_e(X_i+W_i)$. Further, the thus encrypted watermarked DCT coefficients may be partially decrypted on the basis of a first DJ split-key $d_1$ and subsequently sent to the CCU, which then fully decrypts the partially decrypted and watermarked DCT coefficients using a second DJ spit-key $d_2$. The watermarked DCT coefficients are then combined with the plaintext common content item into a watermarked content item in a similar way as described with reference to **Fig. 10.**

It is submitted that the embodiments in **Fig. 2-11** are merely non-limiting examples for illustrating the advantages of the invention. For example, a split-key cryptosystem allows splitting of a decryption key in more than two split-decryption keys, so that it is also particular suitable in situations where content is distributed via a network of CDNs, e.g. a first CDN1 and a second CDN2, wherein each CDN comprises an encryption unit and an embedding function such that each of these CDNs are capable of watermarking and partially decrypting encrypted content items.

It is to be understood that any feature described in relation to any one embodiment may be used alone, or in combination with other features described, and may also be used in combination with one or more features of any other of the embodiments, or any combination of any other of the embodiments. One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, flash memory, ROM chips or any type of solid-state nonvolatile semiconductor memory) on which information is permanently stored; and (ii) writable storage media (e.g., floppy disks within a diskette drive or hard-disk drive or any type of solid-state random-access semiconductor memory) on which alterable information is stored. The invention is not limited to the embodiments described above, which may be varied within the scope of the accompanying claims.

**Claims**

1. Method for enabling secure delivery and watermarking of at least part of a content item X to a content consumption unit, said method executed in a content delivery system comprising a content source and a content distributor, using a split-key cryptosystem comprising encryption and decryption algorithms E and D, a key generation algorithm for generating encryption and decryption keys e,d, a split-key algorithm for splitting e into i different split-encryption keys $e_1,e_2,...,e_i$ and/or for splitting d into k different split-decryption keys $d_1,d_2,...,d_k$ respectively wherein $i,k\geq 1$ and $i+k>2$; wherein when using said split-key cryptosystem executing i consecutive encryption operations and k consecutive decryption operations on content item X using said split-encryption and split-decryption keys respectively, generates a fully decrypted content item X $(D_{dk}(D_{dk-1}(...(D_{d2}(D_{d1}(E_{ei}(E_{ei-1}(...(E_{e2}(E_{e1}(X))...))=X)$;
said method comprising forming a watermark in a first content part of said content item in the encrypted domain on the basis of said split-key cryptosystem and one or more perturbations, wherein forming said watermark comprises:

said content source partially encrypting said at least first content part using said encryption algorithm E and using a first split-encryption key $e_1,e_2,...,e_i$, and partially encrypting said one or more perturbations using said encryption algorithm E and using said first split-encryption key $e_1,e_2,...,e_i$ ,in order to form a first partially encrypted first content part and one or more partially encrypted perturbations; and,
said content distributor embedding said one or more partially encrypted perturbations in said partially encrypted first content part in order to form a partially encrypted watermarked first content part; and,
said content distributor partially encrypting said partially encrypted watermarked first content part in order to form a further partially encrypted watermarked first content part;

or, wherein said forming of said watermark comprises:

said content source encrypting said at least first content part and encrypting one or more perturbations using said encryption algorithm E and said encryption key e in order to form a first encrypted content part and one or more encrypted perturbations;
said content distributor embedding said one or more encrypted perturbations in said encrypted first content part in order to form an encrypted watermarked first content part; and,
said content distributor partially decrypting said encrypted watermarked first content part using said decryption algorithm D and at least one of said split-decryption keys $d_1,d_2,...,d_k$ in order to form a partially decrypted watermarked first content part;

or, wherein said forming of said watermark comprises:

said content source encrypting said at least first content part and encrypting one or more perturbations using said encryption algorithm E and said encryption key e in order to form a first encrypted content part and one or more encrypted perturbations;
said content distributor partially decrypting said first encrypted content part using said decryption algorithm D and one or more of said split-decryption keys $d_1,d_2,...,d_k$, and partially decrypting said one or more encrypted perturbations using said decryption algorithm D and using said one or more of said split-decryption keys $d_1,d_2,...,d_k$ in order to form a partially decrypted first content part and one or more partially decrypted perturbations; and,
said content distributor embedding said one or more partially decrypted perturbations in said partially decrypted first content part in order to form a partially decrypted watermarked first content part.

2. Method according to claim 1 wherein said method further comprises:
providing position information associated with the position of one or more encrypted, partially encrypted or partially decrypted perturbable data units in said encrypted, partially encrypted or partially decrypted first content item respectively, a perturbable data unit comprising a payload which is designated for embedding at least one of said one or more perturbations.

3. Method according to claims 1 or 2 wherein said encryption and decryption algorithms are homomorphic algorithms, and wherein said embedding comprises:
combining at least one of said encrypted, partially encrypted or partially decrypted first perturbations with at least one of said encrypted, partially encrypted or partially decrypted perturbable data units in the encrypted domain respectively using at least one homomorphic algebraic operation

4. Method according to any of claims 1-3 wherein said split-key cryptosystem is based on the homomorphic Damgard-Jurik (DJ) encryption and decryption algorithms, said split-key cryptosystem comprising a split-key algorithm for executing the steps of:

determining an integer $d_2$ to be a random number $d_2 \in \{0,...,n-1\}$ wherein n is the modulus of the DJ system;
determining $d_1$ by calculating $(d - d_2)$ mod n;
or, wherein said split-key cryptosystem is based on the homomorphic RSA encryption and decryption algorithms, said split-key cryptosystem comprising a split-key algorithm for executing the steps of:

determining an integer $d_1$ to be a random number $1 < d_1 < \varphi(n)$, wherein $d_1$ and $\varphi(n)$ are coprime, n is the modulus of the RSJ system, and $\varphi(n)$ is Euler's totient function;

determining $d_2 = d_1^{-1} * d \pmod{\varphi(n)}$;
or, wherein said split-key cryptosystem is based on the homomorphic ElGamal encryption and decryption algorithms, said split-key cryptosystem comprising a split-key algorithm for executing the steps of:
determining an integer $d_1$ to be a random number $d_1 \in \{1,...,p-2\}$;

$$\text{determine } d_2 = (d-d_1) \bmod p.$$

5. Method according to claim 3 wherein said one or more encrypted perturbable data units comprises display distortion information; and, wherein said one or more encrypted perturbations are configured to compensate said display distortion information when said one or more encrypted perturbable data units are combined with said encrypted perturbations.

6. Method according to claim 2 wherein said embedding comprises:
on the basis of said position information replacing one or more of said encrypted, partially encrypted or partially decrypted perturbable data units with one or more partially encrypted or partially decrypted perturbed data units respectively, a perturbed data unit comprising at least one perturbation.

7. Method according to any of claims 1-6 further comprising:
decrypting said partially encrypted or partially decrypted watermarked first content part into a fully decrypted first content part on the basis of said first decryption algorithm D and a split-decryption key respectively, said decrypting being performed by a decryption unit in a content consumption unit or a second content delivery network.

8. Method according to any of claims 1-7 wherein watermarking said encrypted first content is performed by a first content delivery network.

9. Method according to any of claim 1-8 wherein said delivery of said content item comprises the delivery of at least part of said first content item from a first (upstream) content distribution network (CDN1) to at a second (downstream) content distribution network (CDN2), wherein said first and second content distribution networks comprise at least an encryption unit or a decryption unit; and/or,
wherein said first and/or second content delivery network comprise a watermark embedding unit for embedding perturbations in said content item in the encrypted domain.

10. Method according to claim 9, said method further comprising:

said first content delivery network transmitting at least part of said encrypted, partially encrypted or partially decrypted first content part and at least part of said one or more encrypted, partially encrypted or partially decrypted perturbations to said second content distribution network respectively;
said second content distribution network using said at least part of said one or more encrypted, partially encrypted or partially decrypted perturbations for embedding a watermark associated with said second content distribution network in said encrypted, partially encrypted or partially decrypted first content part.

11. Content delivery system for enabling secure delivery and watermarking of a content item X to a content consumption unit, the content delivery system comprising a content source and a content distributor, the content source comprising a key generator comprising a key generating algorithm for generating an encryption key e and a decryption key d and a split-key algorithm for splitting e into i different split-encryption keys $e_1,e_2,...,e_i$ and/or for splitting d into k different split-decryption keys $d_1,d_2,...,d_k$ respectively wherein $i,k \geq 1$ and $i+k>2$; wherein when executing i consecutive encryption operations and k consecutive decryption operations on content item X using said split-encryption and split-decryption keys and an encryption and a decryption algorithm E and D respectively, generates content item X $(D_{d_k}(D_{d_{k-1}}(...(Dd_2(Dd_1(Ee_i(Ee_{i-1}(...(Ee_2(Ee_1(X))...))= X)$;
said content delivery system configured for forming a watermark in a first content part of said content item in the encrypted domain on the basis of said split-key cryptosystem and one or more perturbations, wherein:

said content source comprises an encryption unit configured for partially encrypting said at least first content part using said encryption algorithm E and using a first split-encryption key $e_1,e_2,...,e_i$ , and partially encrypting said one or more perturbations using said encryption algorithm E and using said first split-encryption key $e_1,e_2,...,e_i$ ,in order to form a first partially encrypted first content part and one or more partially encrypted perturbations; and,

said content distributor comprises a watermarking module configured for embedding said one or more partially encrypted perturbations in said partially encrypted first content part in order to form a partially encrypted watermarked first content part, and,

said content distributor further comprises an encryption unit configured for partially encrypting said partially encrypted watermarked first content part in order to form a further partially encrypted watermarked first content part;

or, wherein:

said content source comprises an encryption unit configured for encrypting said at least first content part and encrypting one or more perturbations using said encryption algorithm E and said encryption key e in order to form a first encrypted content part and one or more encrypted perturbations; and,

said content distributor comprises a watermarking module configured for embedding said one or more encrypted perturbations in said encrypted first content part in order to form an encrypted watermarked first content part; and,

said content distributor further comprises a decryption unit configured for partially decrypting said encrypted watermarked first content part using said decryption algorithm D and at least one of said split-decryption keys $d_1, d_2, ..., d_k$ in order to form a partially decrypted watermarked first content part;

or, wherein:

said content source comprises an encryption unit configured for encrypting said at least first content part and encrypting one or more perturbations using said encryption algorithm E and said encryption key e in order to form a first encrypted content part and one or more encrypted perturbations; and,

said content distributor comprises a decryption unit configured for partially decrypting said first encrypted content part using said decryption algorithm D and one or more of said split-decryption keys $d_1, d_2, ..., d_k$, and partially decrypting said one or more encrypted perturbations using said decryption algorithm D and using said one or more of said split-decryption keys $d_1, d_2, ..., d_k$ in order to form a partially decrypted first content part and one or more partially decrypted perturbations; and,

said content distributor further comprises a watermarking module configured for embedding said one or more partially decrypted perturbations in said partially decrypted first content part in order to form a partially decrypted watermarked first content part.

**12.** Computer program product comprising software code portions configured for, when run in the memory of the computers of a content delivery system, executing the method steps according to any of claims 1-10.

**Patentansprüche**

**1.** Verfahren zum Ermöglichen sicherer Zustellung und Markieren mit Wasserzeichen wenigstens eines Teils eines Inhaltselements X zu einer Inhaltsverbrauchseinheit, wobei das Verfahren in einem Inhaltszustellungssystem ausgeführt wird, das eine Inhaltsquelle und einen Inhaltsverteiler umfasst, unter Verwendung eines Kryptosystems mit aufgeteilten Schlüsseln, das Verschlüsselungs- und Entschlüsselungsalgorithmen E und D, einen Schlüsselerzeugungsalgorithmus zum Erzeugen von Verschlüsselungs- und Entschlüsselungsschlüsseln e, d, einen Algorithmus mit aufgeteiltem Schlüssel zum Aufteilen von e in i unterschiedliche Schlüssel für aufgeteilte Verschlüsselung $e_1$, $e_2$, ..., $e_i$ und/oder zum Aufteilen von d in k unterschiedliche aufgeteilte Schlüssel für aufgeteilte Verschlüsselung $d_1$, $d_2$, ..., $d_k$, mit $i, k \geq 1$ und $i+k > 2$;
wobei bei Verwenden des Kryptosystems mit aufgeteilten Schlüsseln das Ausführen von i aufeinanderfolgenden Verschlüsselungsoperationen und k aufeinanderfolgenden Entschlüsselungsoperationen auf ein Inhaltselement X unter jeweiliger Verwendung der Schlüssel für aufgeteilte Verschlüsselung bzw. aufgeteilte Entschlüsselung ein vollständig entschlüsseltes Inhaltselement $X(D_{dk}(D_{dk-1}(...(D_{d2}(D_{d1}(E_{ei}(E_{ei-1}(...(E_{e2}(E_{e1}(X))...))=X$ erzeugt wird,
wobei das Verfahren das Bilden eines Wasserzeichens in einem ersten Inhaltsteil des Inhaltselements in der verschlüsselten Domäne auf der Basis des Kryptosystems mit aufgeteilten Schlüsseln und einer oder mehreren Störungen umfasst, wobei das Bilden des Wasserzeichens Folgendes umfasst:

die Inhaltsquelle verschlüsselt partiell wenigstens den ersten Inhaltsteil unter Verwendung des Verschlüsselungsalgorithmus E und unter Verwendung eines ersten Schlüssels $e_1$, $e_2$, ..., $e_i$ für aufgeteilte Verschlüsselung und verschlüsselt partiell die eine oder die mehreren Störungen unter Verwendung des Verschlüsselungsalgorithmus E und unter Verwendung des ersten Schlüssels $e_1$, $e_2$, ..., $e_i$ für aufgeteilte Verschlüsselung, um einen ersten partiell verschlüsselten ersten Inhaltsteil und ein oder mehrere partiell verschlüsselte Störungen zu bilden; und

der Inhaltsverteiler bettet die eine oder die mehreren partiell verschlüsselten Störungen in den partiell verschlüsselten ersten Inhaltsteil ein, um einen partiell verschlüsselten mit Wasserzeichen markierten ersten Inhaltsteil zu bilden; und

der Inhaltsverteiler verschlüsselt partiell den partiell verschlüsselten mit Wasserzeichen markierten ersten Inhaltsteil, um einen weiteren partiell verschlüsselten mit Wasserzeichen markierten ersten Inhaltsteil zu bilden;

oder wobei das Bilden des Wasserzeichens Folgendes umfasst:

die Inhaltsquelle verschlüsselt den wenigstens ersten Inhaltsteil und verschlüsselt eine oder mehrere Störungen unter Verwendung des Verschlüsselungsalgorithmus E und des Verschlüsselungsschlüssels e, um einen ersten verschlüsselten Inhaltsteil und eine oder mehrere verschlüsselte Störungen zu bilden;

der Inhaltsverteiler bettet die eine oder die mehreren verschlüsselten Störungen in den verschlüsselten ersten Inhaltsteil ein, um einen verschlüsselten mit Wasserzeichen markierten ersten Inhaltsteil zu bilden; und

der Inhaltsverteiler entschlüsselt partiell den verschlüsselten mit Wasserzeichen markierten ersten Inhaltsteil unter Verwendung des Entschlüsselungsalgorithmus D und wenigstens eines der Schlüssel für aufgeteilte Entschlüsselung $d_1$, $d_2$, ..., $d_k$, um einen partiell entschlüsselten mit Wasserzeichen markierten ersten Inhaltsteil zu bilden;

oder wobei das Bilden des Wasserzeichens Folgendes umfasst:

die Inhaltsquelle verschlüsselt den wenigstens ersten Inhaltsteil und verschlüsselt eine oder mehrere Störungen unter Verwendung des Verschlüsselungsalgorithmus E und des Verschlüsselungsschlüssels e, um einen ersten verschlüsselten Inhaltsteil und eine oder mehrere verschlüsselte Störungen zu bilden;

der Inhaltsverteiler entschlüsselt partiell den ersten verschlüsselten Inhaltsteil unter Verwendung des Entschlüsselungsalgorithmus D und eines oder mehrere der Schlüssel für aufgeteiltes Entschlüsseln $d_1$, $d_2$, ..., $d_k$ und entschlüsselt partiell die eine oder die mehreren verschlüsselten Störungen unter Verwendung des Entschlüsselungsalgorithmus D und unter Verwendung des einen oder der mehreren der Schlüssel für aufgeteiltes Entschlüsseln $d_1$, $d_2$, ..., $d_k$, um einen partiell entschlüsselten ersten Inhaltsteil und eine oder mehrere partiell entschlüsselte Störungen zu bilden; und

der Inhaltsverteiler bettet die eine oder die mehreren partiell entschlüsselten Störungen in den partiell entschlüsselten ersten Inhaltsteil ein, um einen partiell entschlüsselten mit Wasserzeichen markierten ersten Inhaltsteil zu bilden.

2. Verfahren nach Anspruch 1, wobei das Verfahren ferner Folgendes umfasst:

Bereitstellen von Positionsinformationen, die der Position einer oder mehrerer verschlüsselter, partiell verschlüsselter oder partiell entschlüsselter störbarer Dateneinheiten in dem verschlüsselten, partiell verschlüsselten bzw. partiell entschlüsselten ersten Inhaltselement zugeordnet sind, wobei eine störbare Dateneinheit Nutzdaten umfasst, die zum Einbetten wenigstens einer aus der einen oder den mehreren Störungen designiert sind.

3. Verfahren nach den Ansprüchen 1 oder 2, wobei der Verschlüsselungs- und der Entschlüsselungsalgorithmus homomorphe Algorithmen sind und wobei das Einbetten Folgendes umfasst:
Kombinieren wenigstens einer der verschlüsselten, partiell verschlüsselten oder partiell entschlüsselten ersten Störungen mit wenigstens einer der verschlüsselten, partiell verschlüsselten oder partiell entschlüsselten störbaren Dateneinheiten in der verschlüsselten Domäne jeweils unter Verwendung wenigstens einer homomorphen algebraischen Operation.

4. Verfahren nach einem der Ansprüche 1-3, wobei das Kryptosystem mit aufgeteilten Schlüsseln auf den homomorphen Damgård-Jurik- (DJ-) Verschlüsselungs- und Entschlüsselungsalgorithmen basiert, wobei das Kryptosystem mit aufgeteilten Schlüsseln einen Algorithmus mit aufgeteilten Schlüsseln zum Ausführen der folgenden Schritte umfasst:

Bestimmen einer Ganzzahl $d_2$ als eine Zufallszahl $d_2$ E {0, ..., n-1}, wobei n der Teilungsrest des DJ-Systems ist;
Bestimmen von $d_1$ durch Berechnen von $(d - d_2)$ mod n;
oder wobei das Kryptosystem mit aufgeteilten Schlüsseln auf den homomorphen RSA-Verschlüsselungs- und Entschlüsselungsalgorithmen basiert, wobei das Kryptosystem mit aufgeteilten Schlüsseln einen Algorithmus mit aufgeteilten Schlüsseln zum Ausführen der folgenden Schritte umfasst:

Bestimmen einer Ganzzahl $d_1$ als eine Zufallszahl $1 < d_1 < \varphi(n)$, wobei $d_1$ und $\varphi(n)$ teilerfremd sind, n der Teilungsrest des RSJ-Systems ist und $\varphi(n)$ die Eulersche Phi-Funktion ist;
Bestimmen von $d_2 = d_1^{-1} * d \pmod{\varphi(n)}$ ;
oder wobei das Kryptosystem mit aufgeteilten Schlüsseln auf den homomorphen Elgamal-Verschlüsselungs- und Entschlüsselungsalgorithmen basiert, wobei das Kryptosystem mit aufgeteilten Schlüsseln einen Algorithmus mit aufgeteilten Schlüsseln zum Ausführen der folgenden Schritte umfasst:
Bestimmen einer Ganzzahl $d_1$ als eine Zufallszahl $d_1 \in \{1, ..., p-2\}$;

$$\texttt{Bestimmen von } d_2 = (d - d_1) \bmod p.$$

5. Verfahren nach Anspruch 3, wobei die eine oder die mehreren verschlüsselten störbaren Dateneinheiten Anzeigeverzerrungsinformationen umfassen; und wobei die eine oder die mehreren verschlüsselten Störungen konfiguriert sind, die Anzeigeverzerrungsinformationen zu kompensieren, wenn die eine oder die mehreren verschlüsselten störbaren Dateneinheiten mit den verschlüsselten Störungen kombiniert werden.

6. Verfahren nach Anspruch 2, wobei das Einbetten Folgendes umfasst:
Ersetzen, auf der Basis der Positionsinformationen, einer oder mehrerer der verschlüsselten, partiell verschlüsselten oder partiell entschlüsselten störbaren Dateneinheiten durch eine oder mehrere partiell verschlüsselte bzw. partiell entschlüsselte gestörte Dateneinheiten, wobei eine gestörte Dateneinheit wenigstens eine Störung umfasst.

7. Verfahren nach einem der Ansprüche 1-6, das ferner Folgendes umfasst:
Entschlüsseln des partiell verschlüsselten oder partiell entschlüsselten mit Wasserzeichen markierten ersten Inhaltsteils in einen vollständig entschlüsselten ersten Inhaltsteil auf der Basis des ersten Entschlüsselungsalgorithmus D bzw. eines Schlüssels für aufgeteiltes Entschlüsseln, wobei das Entschlüsseln durch eine Entschlüsselungseinheit in einer Inhaltsverbrauchseinheit oder einem zweiten Inhaltszustellungsnetz ausgeführt wird.

8. Verfahren nach einem der Ansprüche 1-7, wobei das Markieren des verschlüsselten ersten Inhalts mit Wasserzeichen durch ein erstes Inhaltszustellungsnetz ausgeführt wird.

9. Verfahren nach einem der Ansprüche 1-8, wobei das Zustellen des Inhaltselements das Zustellen wenigstens eines Teils des ersten Inhaltselements aus einem ersten (vorgelagerten) Inhaltsverteilungsnetz (CDN1) zu einem zweiten (nachgelagerten) Inhaltsverteilungsnetz (CDN2) umfasst, wobei das erste und das zweite Inhaltsverteilungsnetz wenigstens eine Verschlüsselungseinheit oder eine Entschlüsselungseinheit umfassen; und/oder,
wobei das erste und/oder das zweite Inhaltszustellungsnetz eine Wasserzeicheneinbettungseinheit zum Einbetten von Störungen in das Inhaltselement in der verschlüsselten Domäne umfassen.

10. Verfahren nach Anspruch 9, wobei das Verfahren ferner Folgendes umfasst:

das erste Inhaltszustellungsnetz sendet wenigstens einen Teil des verschlüsselten, partiell verschlüsselten oder partiell entschlüsselten ersten Inhaltsteil und wenigstens einen Teil der einen oder mehreren verschlüsselten, partiell verschlüsselten oder partiell entschlüsselten Störungen jeweils zu dem zweiten Inhaltsverteilungsnetz;
das zweite Inhaltsverteilungsnetz verwendet den wenigstens Teil der einen oder mehreren verschlüsselten, partiell verschlüsselten oder partiell entschlüsselten Störungen zum Einbetten eines Wasserzeichens, das dem Inhaltsverteilungsnetz zugeordnet ist, in den verschlüsselten, partiell verschlüsselten oder partiell entschlüsselten ersten Inhaltsteil.

11. Inhaltszustellungssystem zum Ermöglichen sicherer Zustellung und Markieren mit Wasserzeichen eines Inhaltselements X zu einer Inhaltsverbrauchseinheit, wobei das Inhaltszustellungssystem eine Inhaltsquelle und einen Inhaltsverteiler umfasst, wobei die Inhaltsquelle Folgendes umfasst:

einen Schlüsselgenerator, der einen Schlüsselerzeugungsalgorithmus zum Erzeugen eines Verschlüsselungsschlüssels e und eines Entschlüsselungsschlüssels d und einen Algorithmus mit aufgeteilten Schlüsseln zum Aufteilen von e in i unterschiedliche Schlüssel zur aufgeteilten Verschlüsselung $e_1, e_2, ..., e_i$ und/oder zum Aufteilen von d in k unterschiedliche Schlüssel zur aufgeteilten Entschlüsselung $d_1, d_2, ..., d_k$ umfasst, mit $i,k \geq$

1 und i+k > 2; wobei bei Ausführen von i aufeinanderfolgenden Verschlüsselungsoperationen und k aufeinanderfolgenden Entschlüsselungsoperationen auf dem Inhaltselement X unter Verwendung der Verschlüsselung für aufgeteilte Verschlüsselung und aufgeteilte Entschlüsselung und eines Verschlüsselungs- und Entschlüsselungsalgorithmus E bzw. D ein Inhaltselement X ($D_{dk}$ ($D_{dk-1}$ (...($D_{d2}$($D_{d1}$($E_{ei}$($E_{ei-1}$(...($E_{e2}$($E_{ei}$(X))...)) = X erzeugt wird;

wobei das Inhaltszustellungssystem zum Bilden eines Wasserzeichens in einem ersten Inhaltsteil des Inhaltselements in der verschlüsselten Domäne auf der Basis des Kryptosystems mit aufgeteilten Schlüsseln und einer oder mehreren Störungen konfiguriert ist, wobei:

die Inhaltsquelle eine Verschlüsselungseinheit umfasst, die konfiguriert ist zum partiellen Verschlüsseln des wenigstens ersten Inhaltsteils unter Verwendung des Verschlüsselungsalgorithmus E und unter Verwendung eines ersten Schlüssels für aufgeteilte Verschlüsselung $e_1$, $e_2$, ..., $e_i$ und partiellen Verschlüsseln der einen oder der mehreren Störungen unter Verwendung des Verschlüsselungsalgorithmus E und unter Verwendung des ersten Schlüssels für aufgeteilte Verschlüsselung $e_1$, $e_2$, ..., $e_1$, um einen ersten partiell verschlüsselten ersten Inhaltsteil und ein oder mehrere partiell verschlüsselte Störungen zu bilden; und

der Inhaltsverteiler ein Wasserzeichenmarkierungsmodul umfasst, das konfiguriert ist zum Einbetten der einen oder der mehreren partiell verschlüsselten Störungen in den partiell verschlüsselten ersten Inhaltsteil, um einen partiell verschlüsselten mit Wasserzeichen markierten ersten Inhaltsteil zu bilden, und

der Inhaltsverteiler ferner eine Verschlüsselungseinheit umfasst, die konfiguriert ist zum partiellen Verschlüsseln des partiell verschlüsselten mit Wasserzeichen markierten ersten Inhaltsteils, um einen weiteren partiell verschlüsselten mit Wasserzeichen markierten ersten Inhaltsteil zu bilden;

oder, wobei:

die Inhaltsquelle eine Verschlüsselungseinheit umfasst, die konfiguriert ist zum Verschlüsseln des wenigstens ersten Inhaltsteils und Verschlüsseln einer oder mehrerer Störungen unter Verwendung des Verschlüsselungsalgorithmus E und des Verschlüsselungsschlüssels e, um einen ersten verschlüsselten Inhaltsteil und eine oder mehrere verschlüsselte Störungen zu bilden; und

der Inhaltsverteiler ein Wasserzeichenmarkierungsmodul umfasst, das konfiguriert ist zum Einbetten der einen oder der mehreren verschlüsselten Störungen in den verschlüsselten ersten Inhaltsteil, um einen verschlüsselten mit Wasserzeichen markierten ersten Inhaltsteil zu bilden; und

der Inhaltsverteiler ferner eine Entschlüsselungseinheit umfasst, die konfiguriert ist zum partiellen Entschlüsseln des verschlüsselten mit Wasserzeichen markierten ersten Inhaltsteils unter Verwendung des Entschlüsselungsalgorithmus D und wenigstens eines der Schlüssel für aufgeteilte Entschlüsselung $d_1$, $d_2$, ..., $d_k$, um einen partiell entschlüsselten mit Wasserzeichen markierten ersten Inhaltsteil zu bilden;

oder, wobei:

die Inhaltsquelle eine Verschlüsselungseinheit umfasst, die konfiguriert ist zum Verschlüsseln des wenigstens ersten Inhaltsteils und Verschlüsseln einer oder mehrerer Störungen unter Verwendung des Verschlüsselungsalgorithmus E und des Verschlüsselungsschlüssels e, um einen ersten verschlüsselten Inhaltsteil und eine oder mehrere verschlüsselte Störungen zu bilden; und

der Inhaltsverteiler eine Entschlüsselungseinheit umfasst, die konfiguriert ist zum partiellen Entschlüsseln des ersten verschlüsselten Inhaltsteils unter Verwendung des Entschlüsselungsalgorithmus D und eines oder mehrerer der Schlüssel für aufgeteiltes Entschlüsseln $d_1$, $d_2$, ..., $d_k$ und partiellen Entschlüsseln partiell der einen oder mehreren verschlüsselten Störungen unter Verwendung des Entschlüsselungsalgorithmus D und unter Verwendung des einen oder der mehreren der Schlüssel für aufgeteiltes Entschlüsseln $d_1$, $d_2$, ..., $d_k$, um einen partiell entschlüsselten ersten Inhaltsteil und eine oder mehrere partiell entschlüsselte Störungen zu bilden; und

der Inhaltsverteiler ferner ein Wasserzeichenmarkierungsmodul umfasst, das konfiguriert ist zum Einbetten der einen oder der mehreren partiell entschlüsselten Störungen in den partiell entschlüsselten ersten Inhaltsteil, um einen partiell entschlüsselten mit Wasserzeichen markierten ersten Inhaltsteil zu bilden.

12. Computerprogrammprodukt, das Softwarecodeabschnitte umfasst, die dafür konfiguriert sind, dann, wenn sie in dem Speicher der Computer eines Inhaltszustellungssystems ablaufen, die Verfahrensschritte nach einem der Ansprüche 1-10 ausführen.

**EP 2 728 790 B1**

**Revendications**

1. Procédé pour permettre la livraison sécurisée et le filigranage d'au moins une partie d'un élément de contenu X à une unité de consommation de contenu, ledit procédé étant exécuté dans un système de livraison de contenu comprenant une source de contenu et un distributeur de contenu, en utilisant un système de chiffrement à clé fractionnée comprenant des algorithmes de chiffrement et de déchiffrement E et D, un algorithme de génération de clés pour générer des clés de chiffrement et de déchiffrement e, d, un algorithme à clé fractionnée pour fractionner e en i différentes clés de chiffrement fractionnées $e_1$, $e_2$, ..., $e_i$ et/ou pour fractionner d en k différentes clés de déchiffrement fractionnées $d_1$, $d_2$, ..., $d_k$ respectivement, où $i,k \geq 1$ et $i+k > 2$ ;

où, lors de l'utilisation dudit système de chiffrement à clé fractionnée, l'exécution de i opérations de chiffrement consécutives et de k opérations de déchiffrement consécutives sur l'élément de contenu X en utilisant respectivement lesdites clés de chiffrement fractionné et de déchiffrement fractionné, génère un élément de contenu X entièrement déchiffré ($D_{dk}$ ($D_{dk-1}$(...($D_{d2}$($D_{d1}$($E_{ei}$($E_{ei-1}$(...($E_{e2}$($E_{e1}$(X))...)) = X) ; ledit procédé comprenant de former un filigrane dans une première partie de contenu dudit élément de contenu dans le domaine chiffré sur la base dudit système de chiffrement à clé fractionnée et d'une ou plusieurs perturbations, où la formation dudit filigrane comprend :

un chiffrement partiel, par ladite source de contenu, de ladite au moins première partie de contenu en utilisant ledit algorithme de chiffrement E et en utilisant une première clé de chiffrement fractionné $e_1$, $e_2$, ..., $e_i$, et un chiffrement partiel desdites une ou plusieurs perturbations en utilisant ledit algorithme de chiffrement E et en utilisant ladite première clé de chiffrement fractionné $e_1$, $e_2$, ... , $e_i$, afin de former une première partie de contenu partiellement chiffrée et une ou plusieurs perturbations partiellement chiffrées ; et,

l'intégration, par ledit distributeur de contenu, desdites une ou plusieurs perturbations partiellement chiffrées dans ladite première partie de contenu partiellement chiffrée afin de former une première partie de contenu filigranée partiellement chiffrée ; et,

un chiffrement partiel, par ledit distributeur de contenu, de ladite première partie de contenu filigranée partiellement chiffrée afin de former une autre première partie de contenu filigranée partiellement chiffrée ;

ou dans lequel ladite formation dudit filigrane comprend :

un chiffrement, par ladite source de contenu, de ladite au moins première partie de contenu et un chiffrement d'une ou de plusieurs perturbations en utilisant ledit algorithme de chiffrement E et ladite clé de chiffrement e afin de former une première partie de contenu chiffrée et une ou plusieurs perturbations chiffrées ;

l'intégration, par ledit distributeur de contenu, desdites une ou plusieurs perturbations chiffrées dans ladite première partie de contenu chiffrée afin de former une première partie de contenu filigranée chiffrée ; et,

un déchiffrage partiel, par ledit distributeur de contenu, de ladite première partie de contenu filigranée chiffrée en utilisant ledit algorithme de déchiffrement D et au moins l'une desdites clés de déchiffrement fractionné $d_1$, $d_2$, ..., $d_k$ afin de former une première partie de contenu filigranée partiellement déchiffrée ;

ou dans lequel ladite formation dudit filigrane comprend :

un chiffrement, par ladite source de contenu, de ladite au moins première partie de contenu et un chiffrement d'une ou de plusieurs perturbations en utilisant ledit algorithme de chiffrement E et ladite clé de chiffrement e afin de former une première partie de contenu chiffrée et une ou plusieurs perturbations chiffrées ;

un déchiffrement partiel, par ledit distributeur de contenu, de ladite première partie de contenu chiffrée en utilisant ledit algorithme de déchiffrement D et une ou plusieurs desdites clés de déchiffrement fractionné $d_1$, $d_2$, ..., $d_k$ et un déchiffrement partiel lesdites une ou plusieurs perturbations chiffrées en utilisant ledit algorithme de déchiffrement D et en utilisant lesdites une ou plusieurs clés desdites clés de déchiffrement fractionné $d_1$, $d_2$, ..., $d_k$ de manière à former une première partie de contenu partiellement déchiffrée et une ou plusieurs perturbations partiellement déchiffrées ; et,

l'intégration, par ledit distributeur de contenu, desdites une ou plusieurs perturbations partiellement déchiffrées dans ladite première partie de contenu partiellement déchiffrée afin de former une première partie de contenu filigranée partiellement déchiffrée.

2. Procédé selon la revendication 1, dans lequel ledit procédé comprend en outre :
de fournir des informations de position associées à la position d'une ou plusieurs unités de données perturbables chiffrées, partiellement chiffrées ou partiellement déchiffrées dans ledit premier élément de contenu chiffré, partiellement chiffré ou partiellement déchiffré respectivement, une unité de données perturbable comprenant une charge utile qui est désignée pour intégrer au moins une desdites une ou plusieurs perturbations.

3. Procédé selon la revendication 1 ou la revendication 2, dans lequel lesdits algorithmes de chiffrement et de déchiffrement sont des algorithmes homomorphes, et où ladite intégration comprend :
de combiner au moins une desdites premières perturbations chiffrées, partiellement chiffrées ou partiellement déchiffrées avec au moins une desdites unités de données perturbables chiffrées, partiellement chiffrées ou partiellement déchiffrées dans le domaine chiffré, respectivement, en utilisant au moins une opération algébrique homomorphe.

4. Procédé selon l'une quelconque des revendications 1 à 3, dans lequel ledit système de chiffrement à clé fractionnée est basé sur les algorithmes homomorphes de chiffrement et de déchiffrement de Damgard-Jurik (DJ), ledit système de chiffrement à clé fractionnée comprenant un algorithme à clé fractionnée pour exécuter les étapes suivantes :

déterminer un nombre entier $d_2$ pour être un nombre aléatoire tel que $d_2 \in \{0, ..., n\text{-}1\}$ où n est le module du système DJ ;
déterminer $d_1$ en calculant $(d\text{-}d_2)\bmod n$ ;
ou, dans lequel ledit système de chiffrement à clé fractionnée est basé sur les algorithmes de chiffrement et de déchiffrement RSA homomorphes, ledit système de chiffrement à clé fractionnée comprenant un algorithme à clé fractionnée pour exécuter les étapes suivantes :

déterminer un nombre entier $d_1$ comme étant un nombre aléatoire $1 < d_1 < \varphi(n)$, où $d_1$ et $\varphi(n)$ sont premiers entre eux, n est le module du système RSJ, et $\varphi(n)$ est la fonction indicatrice d'Euler ;
déterminer $d_2 = d_l^{-1} {}^* d \,(\bmod\varphi(n))$ ;
ou, dans lequel ledit système de chiffrement à clé fractionnée est basé sur les algorithmes de chiffrement et de déchiffrement homomorphes ElGamal, ledit système de chiffrement à clé fractionnée comprenant un algorithme à clé fractionnée pour exécuter les étapes suivantes :

déterminer un nombre entier $d_1$ pour être un nombre aléatoire tel que $d_1\ e\ \{1, ..., p\text{-}2\}$ ;
déterminer $d_2 = (d\text{-}d_1)\bmod p$.

5. Procédé selon la revendication 3, dans lequel lesdites une ou plusieurs unités de données perturbables chiffrées comprennent des informations de distorsion d'affichage ; et dans lequel lesdites une ou plusieurs perturbations chiffrées sont configurées pour compenser lesdites informations de distorsion d'affichage lorsque lesdites une ou plusieurs unités de données perturbables chiffrées sont combinées avec lesdites perturbations chiffrées.

6. Procédé selon la revendication 2, dans lequel ladite intégration comprend :
sur la base desdites informations de position, le remplacement d'une ou de plusieurs desdites unités de données perturbables chiffrées, partiellement chiffrées ou partiellement déchiffrées par une ou plusieurs unités de données perturbées partiellement chiffrées ou partiellement déchiffrées, respectivement, une unité de données perturbées comprenant au moins une perturbation.

7. Procédé selon l'une quelconque des revendications 1 à 6 comprenant en outre :
le déchiffrement de ladite première partie de contenu filigranée partiellement chiffrée ou partiellement déchiffrée en une première partie de contenu entièrement déchiffrée sur la base dudit premier algorithme de déchiffrement D et d'une clé de déchiffrement fractionnée, respectivement, ledit déchiffrement étant effectué par une unité de déchiffrement dans une unité de consommation de contenu ou un second réseau de fourniture de contenu.

8. Procédé selon l'une quelconque des revendications 1 à 7, dans lequel le filigranage dudit premier contenu chiffré est réalisé par un premier réseau de diffusion de contenu.

9. Procédé selon l'une quelconque des revendications 1 à 8, dans lequel ladite livraison dudit élément de contenu comprend la livraison d'au moins une partie dudit premier élément de contenu depuis un premier réseau de distribution de contenu (CDN1) (en amont) vers un second réseau de distribution de contenu (CDN2) (en aval),
où lesdits premier et second réseaux de distribution de contenu comprennent au moins une unité de chiffrement ou une unité de déchiffrement ; et/ou,
où lesdits premier et/ou second réseaux de distribution de contenu comprennent une unité d'intégration de filigrane pour intégrer des perturbations dans ledit élément de contenu dans le domaine chiffré.

10. Procédé selon la revendication 9, ledit procédé comprenant en outre :

EP 2 728 790 B1

la transmission, par ledit premier réseau de distribution de contenu, d'au moins une partie de ladite première partie de contenu chiffrée, partiellement chiffrée ou partiellement déchiffrée et d'au moins une partie desdites une ou plusieurs perturbations chiffrées, partiellement chiffrées ou partiellement déchiffrées audit second réseau de distribution de contenu, respectivement ;

l'utilisation, par ledit second réseau de distribution de contenu, de ladite au moins une partie desdites une ou plusieurs perturbations chiffrées, partiellement chiffrées ou partiellement déchiffrées pour intégrer un filigrane associé audit second réseau de distribution de contenu dans ladite première partie de contenu chiffrée, partiellement chiffrée ou partiellement déchiffrée.

11. Système de livraison de contenu pour permettre la livraison sécurisée et le filigranage d'un élément de contenu X à une unité de consommation de contenu, le système de livraison de contenu comprenant une source de contenu et un distributeur de contenu, la source de contenu comprenant :

un générateur de clés comprenant un algorithme de génération de clés pour générer une clé de chiffrement e et une clé de déchiffrement d et un algorithme de clé fractionnée pour fractionner e en i différentes clés de chiffrement fractionnées $e_1$, $e_2$, ..., $e_i$ et/ou pour fractionner d en k différentes clés de déchiffrement fractionnées $d_1$, $d_2$, ..., $d_k$ respectivement, où i, k $\geq$ 1 et i+k > 2 ; où, lors de l'exécution de i opérations de chiffrement consécutives et de k opérations de déchiffrement consécutives sur l'élément de contenu X en utilisant lesdites clés de chiffrement fractionné et de déchiffrement fractionné et un algorithme de chiffrement et de déchiffrement E et D, respectivement, le système génère un élément de contenu X ($D_{dk}$ ($D_{dk-1}$(...($D_{d2}$($D_{d1}$($E_{ei}$($E_{ei-1}$(... ($E_{e2}$($E_{e1}$(X))...)) = X) ;

ledit système de fourniture de contenu étant configuré pour former un filigrane dans une première partie de contenu dudit élément de contenu dans le domaine chiffré sur la base dudit système de chiffrement à clé fractionnée et d'une ou plusieurs perturbations, où :

ladite source de contenu comprend une unité de chiffrement configurée pour chiffrer partiellement ladite au moins première partie de contenu en utilisant ledit algorithme de chiffrement E et en utilisant une première clé de chiffrement fractionné $e_1$, $e_2$, ... , $e_i$, et pour chiffrer partiellement lesdites une ou plusieurs perturbations en utilisant ledit algorithme de chiffrement E et en utilisant ladite première clé de chiffrement fractionné $e_1$, $e_2$, ... , $e_i$, afin de former une première partie de contenu partiellement chiffrée et une ou plusieurs perturbations partiellement chiffrées ; et,

ledit distributeur de contenu comprend un module de filigrane configuré pour intégrer lesdites une ou plusieurs perturbations partiellement chiffrées dans ladite première partie de contenu partiellement chiffrée afin de former une première partie de contenu filigranée partiellement chiffrée, et,

ledit distributeur de contenu comprend en outre une unité de chiffrement configurée pour chiffrer partiellement ladite première partie de contenu filigranée partiellement chiffrée afin de former une autre première partie de contenu filigranée partiellement chiffrée ;

ou, dans lequel :

ladite source de contenu comprend une unité de chiffrement configurée pour chiffrer ladite au moins première partie de contenu et chiffrer une ou plusieurs perturbations en utilisant ledit algorithme de chiffrement E et ladite clé de chiffrement e afin de former une première partie de contenu chiffrée et une ou plusieurs perturbations chiffrées ; et,

ledit distributeur de contenu comprend un module de filigrane configuré pour intégrer lesdites une ou plusieurs perturbations chiffrées dans ladite première partie de contenu chiffrée afin de former une première partie de contenu chiffrée en filigrane ; et,

ledit distributeur de contenu comprend en outre une unité de déchiffrement configurée pour déchiffrer partiellement ladite première partie de contenu filigranée chiffrée en utilisant ledit algorithme de déchiffrement D et au moins une desdites clés de déchiffrement fractionné $d_1$, $d_2$, ..., $d_k$ afin de former une première partie de contenu filigranée partiellement déchiffrée ;

ou, dans lequel :

ladite source de contenu comprend une unité de chiffrement configurée pour chiffrer ladite au moins première partie de contenu et chiffrer une ou plusieurs perturbations en utilisant ledit algorithme de chiffrement E et ladite clé de chiffrement e afin de former une première partie de contenu chiffrée et une ou plusieurs perturbations chiffrées ; et,

ledit distributeur de contenu comprend une unité de déchiffrement configurée pour déchiffrer partiellement ladite première partie de contenu chiffrée en utilisant ledit algorithme de déchiffrement D et une ou plusieurs desdites clés de déchiffrement fractionné $d_1$, $d_2$, ..., $d_k$, et déchiffrer partiellement lesdites une ou plusieurs perturbations chiffrées en utilisant ledit algorithme de déchiffrement D et en utilisant lesdites une ou plusieurs desdites clés de déchiffrement fractionné $d_1$, $d_2$, ..., $d_k$ afin de former une première partie de contenu partiellement déchiffrée et une ou plusieurs perturbations partiellement déchiffrées ; et,

ledit distributeur de contenu comprend en outre un module de filigranage configuré pour intégrer lesdites une ou plusieurs perturbations partiellement déchiffrées dans ladite première partie de contenu partiellement déchiffrée afin de former une première partie de contenu filigranée partiellement déchiffrée.

12. Produit programme informatique comprenant des portions de code logiciel configurées, lorsqu'elles sont exécutées dans la mémoire des ordinateurs d'un système de fourniture de contenu, pour exécuter les étapes du procédé selon l'une quelconque des revendications 1 à 10.

CS

P | 124

126

w1,w2

144

X

121

E | 120

$X_e$

122

e   118

KG | 116

110

CD

WE | 142

140

CCU

162

$X^{w1}_e$

152

D

160

$X^{w1}$

164

d

CCU

172

$X^{w2}_e$

156

D

170

$X^{w2}$

168

119   d

100

Figure 1

200

Figure 2

Figure 3

400

Figure 4

(A)

Parameters
502

↓

Specified random process
504

↓

Secret
information S
506

(B)

Secret
information S
508

↓

Random key generating
process
510

↓

Random encryption
key e (d)
512

↓

Deterministic cipher
algorithm
514

↓

Associated decryption
key d (encryption key e)
516

(C)

Secret
information S
518

Key d (e)
526

↓

Random split-key
generating process
520

↓

Random split-
key $d_2$ ($e_2$)
522

↓

Deterministic split-key
algorithm
524

↓

Associated split-key $d_1$
(split-key $e_1$)
528

Figure 5

Figure 6

700

Figure 7

Figure 8

800

Figure 9

1000

Figure 10

1104 | splitting a compressed content item into a common content item and one or more compressed perturbable data units, preferably DCT coefficients

1106 | encrypting said one or more compressed perturbable data units on the basis of a homomorphic split-key cryptosystem

1112 | encrypting at least part of a watermark on the basis of said homomorphic split-key cryptosystem

1108 | generating watermarked data units by combining said encrypted watermark with said perturbable data units in the encrypted domain

1110 | decrypting said encrypted watermarked data units on the basis of at least a first and second split-decryption key

1112 | combining said common content item and said watermarked data units into a watermarked content item

# Figure 11

1100

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- EP 0898396 A2
- US 20110129116 A
- EP 11182553

## Non-patent literature cited in the description

- **VERIMATRIX.** *Integrated Watermarking Creates More Profitable Pay-TV Businesses, Layered Security Enables Protection Beyond Networks and Devices,* 2011